# FASCICULE DE BREVET EUROPEEN

(11) **EP 3 837 074 B1**
(45) Date de publication et mention de la délivrance du brevet: **22.03.2023**
(21) Numéro de dépôt: 19749386.9
(22) Date de dépôt: 09.08.2019
(51) Int. Cl.: B23B 35/00, B23C 3/02, B23Q 5/04, B23Q 5/32

(54) **DISPOSITIF DE PERCAGE ORBITAL**
ORBITALE BOHRVORRICHTUNG
ORBITAL DRILLING DEVICE

(30) Priorité: 16.08.2018 FR 1857512
(43) Date de publication de la demande: 23.06.2021
(73) Titulaire: Advanced Electrical Tools, 59113 Seclin (FR)
(72) Inventeur: GUERIN, Sylvain, 59113 SECLIN (FR)
(74) Mandataire: Bureau Duthoit Legros Associés
(86) Numéro de dépôt international: PCT/EP2019/071505
(87) Numéro de publication internationale: WO 2020/035422

(56) Documents cités:
- EP-A1- 1 635 975
- EP-A1- 2 529 867
- CN-A- 106 077 774
- CN-B- 102 699 403
- CN-B- 103 659 403
- US-A1- 2003 017 017

## Description

La présente invention concerne un dispositif de perçage orbital, et un procédé de perçage mis en oeuvre par un tel dispositif.

Le domaine de l'invention est celui de l'usinage de pièces et notamment de pièces en métal ou en matériau composite, notamment employées dans l'industrie aéronautique.

De façon bien connue le perçage orbital consiste en la réalisation d'un trou à l'aide d'un outil de coupe se déplaçant selon une trajectoire orbitale résultant de la combinaison :
- d'une première rotation de l'outil de coupe autour de son axe, et
- d'une deuxième rotation de l'outil de coupe autour d'un axe de rotation décentré, décalé radialement par rapport à l'axe de l'outil de coupe.

L'entraînement en rotation de l'outil de coupe autour de ces deux axes de rotation combinés permet à l'outil de coupe de décrire un mouvement orbital et de réaliser un perçage de forme circulaire à la forme et aux dimensions souhaitées.

Le décalage radial entre ces deux axes de rotation peut généralement être réglé afin de pouvoir réaliser des perçages de forme circulaire de différentes dimensions avec le même outil de coupe, avec une grande précision dans les cotes de fabrication, par l'intermédiaire de différents moyens de réglage.

On connaît par exemple du document WO 01/15870, un dispositif de perçage orbital comprenant une fraise entraînée par un moteur pneumatique, ledit moteur étant de forme sensiblement cylindrique.

Le moteur est monté fixe dans une première bague excentrée par rapport à l'axe de rotation du rotor du moteur, elle-même montée dans une deuxième bague excentrée par rapport à la première bague excentrée, d'axe de rotation parallèle à celui de la première bague excentrée.

Le décalage entre les deux axes de rotation de la fraise est réglé en ajustant la position relative entre les bagues excentrées par l'intermédiaire d'une vis montée sur la deuxième bague excentrée dont le filet vient engrener avec une denture disposée sur le pourtour de la première bague excentrée. Une deuxième vis de pression, montée également sur la deuxième bague excentrée permet de bloquer la deuxième bague excentrée par rapport à la première bague excentrée.

Un tel dispositif présente plusieurs inconvénients. Premièrement, le réglage du décalage se fait de façon manuelle par un opérateur et peut donc s'avérer imprécis, ce qui nuira à la qualité de fabrication des pièces usinées avec un tel dispositif.

De plus, le réglage du décalage ne peut se faire que lorsque la fraise n'est pas en rotation, ce qui augmente le temps de réalisation des opérations de perçage réalisées avec un tel dispositif.

On connaît également du document WO 2009/005446 A1 un outil de perçage orbital destiné à être monté sur une broche de machine-outil, comprenant :
- un corps excentrique extérieur comprenant un trou excentrique cylindrique s'étendant longitudinalement,
- un corps excentrique intérieur monté rotatif dans le trou excentrique du corps excentrique extérieur et possédant également un trou excentrique cylindrique s'étendant longitudinalement,
- un moteur de broche pour recevoir de façon amovible un outil de coupe et monté rotatif dans le trou excentrique du corps excentrique intérieur,
- un porte-outil attaché de façon concentrique à une extrémité de machine-outil du corps excentrique extérieur pour monter ce dernier de manière amovible à une broche de machine-outil pour l'entraînement en rotation du corps excentrique extérieur,
- des moyens d'ajustement du décalage radial, comprenant un moteur électrique et une courroie d'entraînement, configurés pour entraîner en rotation le corps excentrique intérieur par rapport au corps excentrique extérieur pour ajuster le décalage radial de l'axe de rotation du moteur par rapport à l'axe de rotation du moteur de broche de la broche de la machine-outil, et
- un moyen pour transférer la puissance au moteur de broche et aux moyens d'ajustement du décalage radial.

Même si ce dispositif présente l'avantage de permettre un réglage plus précis qu'un réglage manuel grâce à l'emploi d'un moteur électrique pour entraîner le déplacement du corps excentrique extérieur par rapport au corps excentrique intérieur, celui-ci présente encore plusieurs inconvénients.

En effet, l'emploi d'une courroie pour réaliser l'entraînement du corps excentrique extérieur par rapport au corps excentrique intérieur peut entraîner des imprécisions dans le réglage du décalage du corps excentrique extérieur par rapport au corps excentrique intérieur, à cause de la distension de la courroie au cours du temps.

En fonctionnement, le porte outil de l'outil de perçage orbital est fixé à la broche d'une machine-outil, l'outil de perçage orbital étant prévu pour pivoter dans son ensemble sous l'action de la broche, y compris le moteur de broche recevant l'outil de coupe, et le moteur des moyens d'ajustement du décalage radial. Un défaut d'un tel outil est qu'il nécessite des connecteurs électriques tournant pour l'alimentation électrique de ces deux moteurs.

Le mouvement orbital est obtenu par mise en rotation de la broche par un moteur de la machine-outil, et la mise en rotation de l'outil de coupe autour de son axe par le moteur de broche de l'outil, le moteur des moyens d'ajustement du décalage radial étant alors à l'arrêt.

Un deuxième défaut d'un tel outil de perçage orbital est donc qu'il n'est pas autonome, nécessitant d'être combiné avec la broche d'une machine-outil pour permettre la mise en oeuvre d'un perçage orbital.

Par ailleurs, les dispositifs décrits dans les documents WO 01/15870 et WO 2009/005446 A1 ne permettent que la réalisation de perçage de section sensiblement circulaire.

On connaît encore du document US 2003/017017 A1 ou encore du document WO 2004/113002 A1, un dispositif de perçage orbital comprenant une unité de moteur de broche entraînant en rotation un outil de coupe autour de son axe, un mécanisme de réglage du décalage radial, un mécanisme de rotation excentrique et un mécanisme de déplacement axial.

Le mécanisme de réglage du décalage radial comprend :
- un corps cylindrique intérieur avec un perçage cylindrique excentrique, ledit perçage excentrique ayant un axe longitudinal central parallèle et décalé radialement d'un axe longitudinal central dudit corps cylindrique intérieur, ledit perçage excentrique étant configuré pour supporter radialement et en rotation ladite unité de broche pour entraîner ledit outil de coupe, et
- un corps cylindrique extérieur avec un perçage cylindrique excentrique, ledit perçage excentrique dudit corps cylindrique extérieur ayant un axe longitudinal central parallèle et décalé radialement d'un axe longitudinal central dudit corps cylindrique extérieur d'une distance égale à la distance entre ledit axe central du perçage excentrique du corps intérieur et ledit axe central du corps cylindrique intérieur, ledit corps cylindrique intérieur étant radialement supporté dans ledit perçage excentrique du corps cylindrique extérieur et mobile en rotation par rapport à celui-ci, de sorte à pouvoir ajuster la distance radiale entre ledit axe central de l'outil de coupe et ledit axe principal.

Par une rotation relative mutuelle des corps cylindriques intérieur et extérieur, il est ainsi possible de positionner l'axe central du perçage excentrique du corps cylindrique intérieur de sorte à régler le décalage radial entre l'axe central de l'outil et l'axe principal du dispositif de perçage orbital.

Le corps cylindrique extérieur est mis en rotation par un moteur par l'intermédiaire d'une courroie qui coopère avec une poulie connectée au corps extérieur. De même, le corps cylindrique intérieur est mis en rotation par un moteur par l'intermédiaire d'une courroie qui coopère avec une poulie connectée au corps intérieur, par l'intermédiaire d'un moyen d'accouplement autorisant un décalage axial.

Une rotation relative entre le corps cylindrique intérieur et le corps cylindrique extérieur par un entraînement de chacun de ces corps cylindriques avec des vitesses de rotation différentes modifie la valeur du décalage radial de l'outil de coupe.

Cela permet, en combinaison avec le mécanisme de déplacement axial de l'outil de coupe, d'envisager différentes géométries de perçages réalisées avec ce dispositif de perçage orbital.

Selon les constatations de l'inventeur, un tel dispositif de perçage orbital présente néanmoins plusieurs inconvénients.

Comme visible sur l'exemple de réalisation de la figure 1 du document US 2003/0017017 A1, ou encore de la figure 3 et de la figure 5 du document WO 2004/113002 A1, l'emploi d'une unité de moteur de broche entraînant l'outil de coupe en rotation s'étendant longitudinalement, selon l'axe du corps cylindrique intérieur ou du corps cylindrique extérieur, au-delà du mécanisme de réglage du décalage radiale (i.e l'ensemble corps cylindrique intérieur/corps cylindrique extérieur), en saillie sur la partie arrière du dispositif de perçage orbital augmente également considérablement l'encombrement longitudinal d'un tel dispositif de perçage orbital.

Egalement, les conceptions selon le document US2003/0017017 A1 ou encore selon le document WO 2004/113002 A1 obligent à positionner les moteurs d'entraînement des corps excentriques extérieur et intérieur, mais également le moteur du mécanisme de déplacement axial, avec un décalage important par rapport au mécanisme de réglage du décalage radial, selon une direction radiale du corps cylindrique intérieur ou du corps cylindrique extérieur, ce qui augmente considérablement l'encombrement radial d'un tel dispositif de perçage orbital. Une telle conception oblige ainsi l'emploi d'une transmission par courroies pour entraîner les rotations des corps cylindriques excentriques intérieur et extérieur.

Plus encore, et selon les constatations de l'inventeur, l'utilisation d'une transmission par courroie entraîne des imprécisions dans le réglage du décalage radial de l'outil de coupe, et d'autant plus que ce réglage est réalisé dynamiquement par la rotation relative entre le corps cylindrique intérieur et le corps cylindrique extérieur.

L'invention se propose de pallier tout ou partie des inconvénients des dispositifs de perçage orbital de l'état de la technique en proposant un dispositif de perçage orbital permettant de régler de façon précise le décalage radial entre les deux axes de rotation du mouvement orbital

Un autre objectif de la présente invention est, au moins selon un mode de réalisation, de permettre de réaliser rapidement des perçages d'une plus grande diversité, en termes de forme et de dimensions, par comparaison avec l'état de la technique précité décrits dans les documents WO 01/15870 et WO 2009/005446.

Un autre but de la présente invention est, au moins selon un mode de réalisation de proposer un dispositif de perçage autonome en ce qu'il ne nécessite pas d'être couplé à la broche d'une machine-outil pour l'obtention d'un perçage orbital.

Un autre but de la présente invention est de proposer un dispositif de perçage orbital d'encombrement, notamment radial et longitudinal, réduit, par comparaison notamment avec l'état de la technique connu du document US2003/0017017 A1 ou encore du document WO 2004/113002 A1.

Ainsi, l'invention concerne un dispositif de perçage orbital selon la revendication 1 comprenant, sur un même bâti :
- un moteur,
- un outil de coupe entraîné en rotation sur lui-même par ledit moteur, autour de son axe de rotation,
- un premier excentrique, intérieur, comprenant un corps cylindrique creux recevant ledit moteur, ledit premier excentrique étant configuré pour être monté mobile en rotation par rapport au moteur, ledit moteur étant configuré pour être monté sensiblement immobile en rotation par rapport au bâti autour de l'axe de rotation de l'outil de coupe sur lui-même, le premier excentrique comprenant une paroi cylindrique intérieure d'axe A13i et une paroi cylindrique extérieure d'axe A13e, l'axe de la paroi cylindrique intérieure étant décalé d'une distance E13 par rapport à l'axe de la paroi cylindrique extérieure,
- un deuxième excentrique, extérieur, comprenant un corps cylindrique creux recevant le premier excentrique, monté mobile en rotation par rapport au deuxième excentrique, le deuxième excentrique comprenant une paroi cylindrique intérieure d'axe A14i et une paroi cylindrique extérieure d'axe A14e, l'axe de la paroi cylindrique intérieure étant décalé par rapport à l'axe de la paroi cylindrique extérieure,
- un corps de référence, solidaire du bâti, comprenant une paroi cylindre intérieure d'axe A15i, recevant le deuxième excentrique, monté mobile en rotation par rapport au corps de référence,
- un premier moyen d'entraînement configuré pour entraîner en rotation le premier excentrique par rapport au bâti, à une vitesse de rotation ω1,
- un deuxième moyen d'entraînement configuré pour entraîner en rotation le deuxième excentrique par rapport au bâti à une vitesse de rotation ω2, simultanément à la rotation du premier excentrique par rapport au bâti,
- des moyens de pilotage configurés pour la réalisation d'un perçage à la forme et aux dimensions souhaitées par le parcours par l'outil de coupe d'une trajectoire déterminée, par la mise en oeuvre des étapes suivantes :
   - mise en rotation de l'outil de coupe sur lui-même autour de son axe de rotation,
   - mises en rotations continues et simultanées du premier excentrique par rapport au bâti à une vitesse de rotation ω13, et du deuxième excentrique par rapport au bâti à une vitesse de rotation ω14 de sorte que l'outil de coupe effectue également une rotation autour de l'axe du corps de référence de rayon, correspondant à la distance séparant l'axe du corps de référence de l'axe de rotation de l'outil de coupe sur lui-même,
      et
   - pilotage en continu et simultanément de la position angulaire et de la vitesse de rotation par rapport au bâti du premier excentrique, et de la position angulaire et de la vitesse de rotation par rapport au bâti du deuxième excentrique, de telle sorte que l'outil de coupe suive ladite trajectoire déterminée, située dans une zone définie entre le cercle, centré sur l'axe et de rayon |E13-E14|, et le cercle, centré sur l'axe et de rayon E13+E14.

Selon l'invention, lesdits moyens de pilotage conviennent pour reproduire n'importe quelle trajectoire de l'outil de coupe dans ladite zone par contrôle en continu au cours du perçage du décalage angulaire entre la position angulaire par rapport au bâti du premier excentrique et la position angulaire par rapport au bâti du deuxième excentrique.

Selon l'invention, le premier moyen d'entraînement comprend une première couronne dentée périphérique, montée rotative autour de l'axe du corps de référence, solidaire en rotation du premier excentrique, et un moteur, solidaire du bâti, avec un pignon denté monté sur l'arbre d'entraînement du moteur venant engrener avec ladite première couronne dentée, la première couronne dentée et le premier excentrique étant solidaires par l'intermédiaire d'un joint d'Oldham afin de compenser le désaxement entre la première couronne dentée et le premier excentrique .

Selon l'invention, le deuxième moyen d'entraînement comprend une deuxième couronne dentée périphérique, solidaire et coaxiale à la paroi cylindrique extérieure du deuxième excentrique et un moteur avec un pignon denté monté sur l'arbre d'entraînement du moteur et venant engrener avec ladite couronne dentée .

Selon l'invention le moteur du premier moyen d'entraînement et le moteur du deuxième moyen d'entraînement sont fixés sur une même paroi de fixation, solidaire du bâti et le moteur du premier moyen d'entraînement et le moteur du deuxième moyen d'entraînement sont disposés décalés longitudinalement, selon l'axe du corps de référence, par rapport au moteur entraînant l'outil de coupe en rotation, le moteur entraînant l'outil de coupe, reçu dans le premier excentrique, étant positionné en position longitudinale intermédiaire entre l'outil de coupe et les moteurs du premier moyen d'entraînement et du deuxième moyen d'entraînement, et dans lequel le moteur du premier moyen d'entraînement et le moteur du deuxième moyen d'entraînement sont chacun, au moins partiellement, en recouvrement radial par rapport au rayon de la paroi cylindrique extérieure du deuxième excentrique . Selon l'invention, le moteur entraînant l'outil de coupe en rotation sur lui-même comprend un stator et un rotor, l'outil de coupe étant monté en entraînement direct sur ledit rotor dudit moteur rigidement solidaire du rotor.

Des modes de réalisation préférentiels de la présente invention sont définis dans les revendications dépendantes.

Selon des caractéristiques optionnelles de l'invention, prises seules ou en combinaison :
- le moteur du premier moyen d'entraînement et/ou le moteur du deuxième moyen d'entraînement, présente une ou plusieurs des caractéristiques suivantes :
   --moteur basse tension, notamment inférieure à 48 volts,
   -- moteur électrique brushless,
   -- moteur à rotor externe,
   -- rapport poids puissance supérieur à 5W/g,
   -- employant une technologie d'aimants à haut point de Curie, notamment sensiblement égal à 200° environs,
   -- présentant des fils de bobinage dont les isolants peuvent supporter des températures de 180°C ;
- la première couronne dentée du premier moyen d'entraînement et la deuxième couronne dentée du deuxième moyen d'entraînement son identiques, présentant un même diamètre, un même nombre de dents, et un même pas et profil de denture ;
- le dispositif de perçage orbital comprend en outre des moyens d'entraînement en translation de l'outil de coupe, selon une direction parallèle à l'axe de rotation de l'outil de coupe sur lui-même, afin de permettre le déplacement en translation de l'outil de coupe ;
- les moyens d'entraînement en translation comprennent un système vis/écrou, comprenant une tige filetée entraînée en rotation par l'intermédiaire d'un moteur et un écrou monté mobile en translation par rapport au bâti, ladite tige filetée étant reçue dans ledit écrou ;
- le moteur des moyens d'entraînement en translation est fixé sur ladite paroi de fixation du bâti ;
- le moteur des moyens d'entraînement en translation est disposé décalé longitudinalement, selon l'axe du corps de référence, par rapport au moteur entraînant l'outil de coupe en rotation, le moteur entraînant l'outil de coupe, reçu dans le premier excentrique, étant positionné en position intermédiaire entre l'outil de coupe et les moteurs du premier moyen d'entraînement, du deuxième moyen d'entraînement et des moyens d'entraînement en translation, et dans lequel le moteur des moyens d'entraînement en translation est également, au moins partiellement, en recouvrement radial par rapport au rayon de la paroi cylindrique extérieure du deuxième excentrique ;
- le moteur des moyens d'entraînement en translation présente une ou plusieurs des caractéristiques suivantes :
   -- --moteur basse tension, notamment inférieure à 48 volts,
   -- moteur électrique brushless,
   -- moteur à rotor externe,
   -- rapport poids puissance supérieur à 5W/g,
   -- employant une technologie d'aimants à haut point de Curie, notamment sensiblement égal à 200° environs,
   -- présentant des fils de bobinage dont les isolants peuvent supporter des températures de 180°C.
- le moteur entraînant l'outil de coupe en rotation sur lui-même comprend des moyens de branchement, prévus pour être branchés à une alimentation en énergie, afin d'alimenter ledit moteur en énergie, lesdits moyens de branchement étant disposés au niveau d'une extrémité longitudinale arrière du moteur, à l'opposé de l'outil de coupe, et un doigt de branchement est prévu, configuré pour recevoir en branchement lesdits moyens de branchement du moteur afin d'assurer la liaison de ladite source d'énergie au moteur, ledit doigt de branchement étant relié au bâti par l'intermédiaire de moyens de guidage, configurés de sorte à autoriser une rotation du doigt de branchement par rapport au bâti autour d'un axe de rotation, avec un débattement angulaire limité, combinée à une translation dudit axe de rotation selon une direction, sensiblement perpendiculaire à l'axe de rotation, sur une distance limitée, de sorte à sensiblement immobiliser le moteur en rotation autour de l'axe de rotation de l'outil de coupe sur lui-même, avec un débattement angulaire limité, par l'intermédiaire des moyens de branchement

L'invention concerne également un procédé de perçage orbital selon la revendication 12.

L'invention sera mieux comprise à la lecture de la description suivante accompagnée des dessins parmi lesquels :

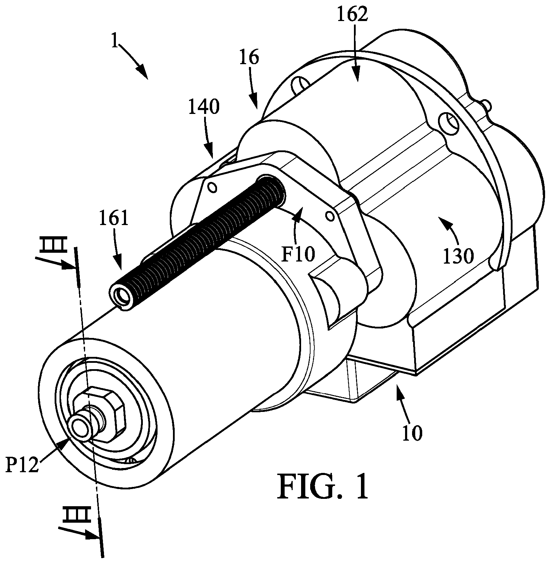

- la figure 1 est une vue en perspective du dispositif de perçage selon un mode de réalisation conforme à l'invention,

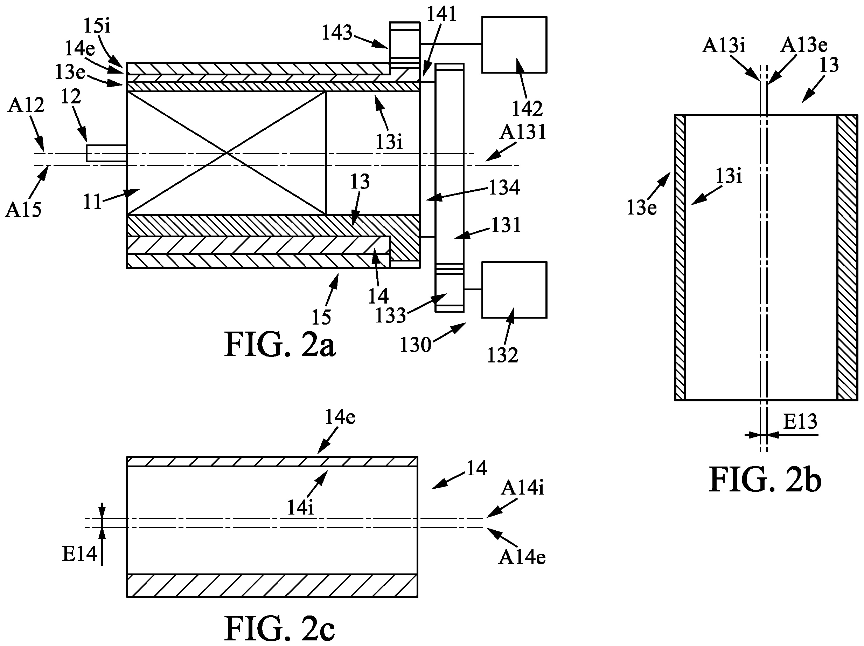

- la figure 2a est une représentation schématique en coupe d'une portion du dispositif de perçage selon un mode de réalisation conforme à l'invention,
- la figure 2b est une représentation schématique en coupe du premier excentrique du dispositif de perçage de la figure 2,
- la figure 2c est une représentation schématique en coupe du deuxième excentrique du dispositif de perçage de la figure 2,

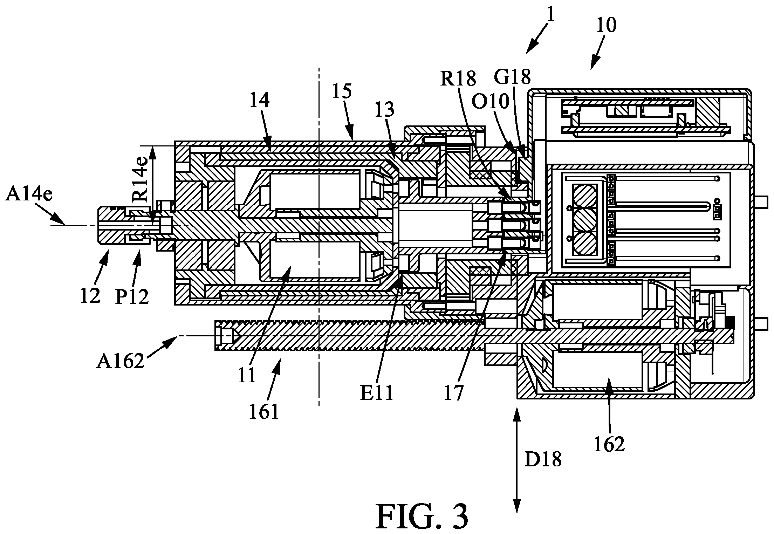

- la figure 3 est une vue en coupe selon la ligne III-III du dispositif de la figure 1,

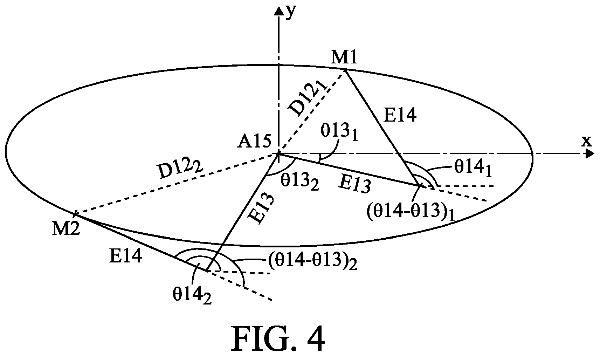

- la figure 4 est une vue de dessus d'une trajectoire de forme elliptique suivie par l'outil de coupe au cours du procédé de perçage orbital mis en oeuvre par un dispositif de perçage selon un mode de réalisation conforme à l'invention,

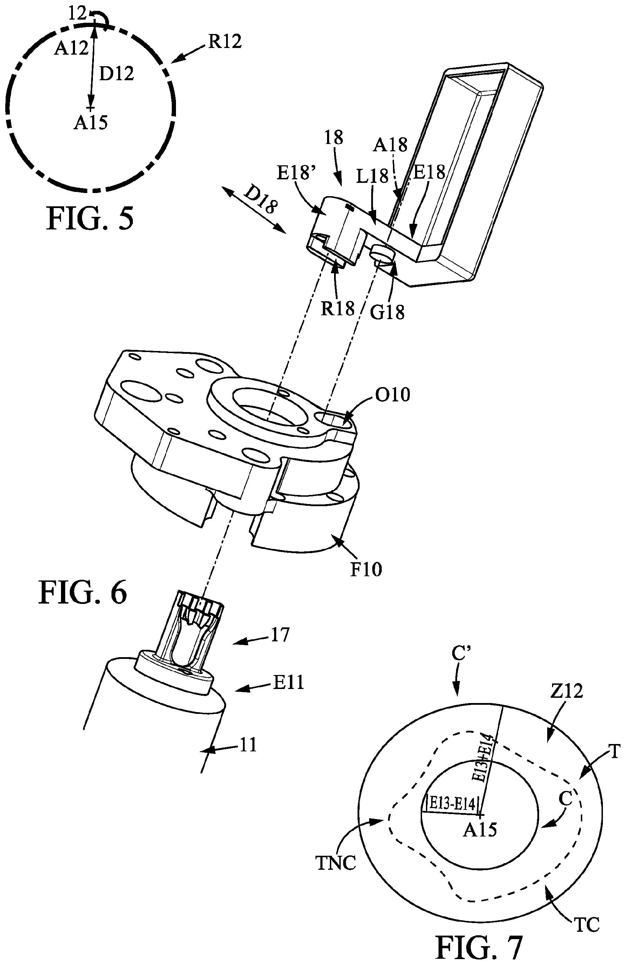

- la figure 5 représente de façon schématique une possibilité de trajectoire parcourue par l'outil de coupe au cours du procédé de perçage orbital mis en oeuvre par un dispositif de perçage selon un mode de réalisation de l'invention,
- la figure 6 est une vue en perspective éclatée des moyens de branchement du moteur, de la paroi de fixation du bâti et du doigt de branchement du dispositif de perçage orbital de la figure,
- la figure 7 représente de façon schématique la zone dans laquelle la trajectoire suivie par l'outil de coupe peut se situer lors du procédé de perçage orbital mis en oeuvre par un dispositif de perçage selon un mode de réalisation conforme à l'invention,

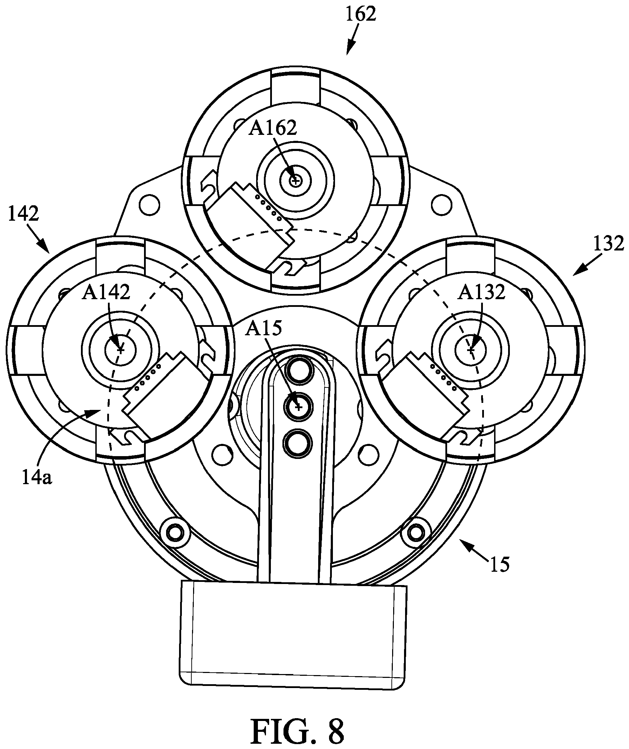

- la figure 8 représente une vue de dessus du dispositif de perçage de la figure 1.

La présente divulgation concerne un procédé de perçage orbital pour la réalisation d'un perçage dans une pièce, comprenant les étapes :
(a) fournitures d'un dispositif de perçage orbital 1 comprenant, sur un même bâti 10 :
   - un moteur 11,
   - un outil de coupe 12, entraîné en rotation sur lui-même par ledit moteur 11, autour de son axe de rotation A12,
   - un premier excentrique 13, intérieur, comprenant un corps cylindrique creux recevant ledit moteur 11, ledit premier excentrique 13 étant configuré pour être monté mobile en rotation par rapport au moteur 11, le ledit moteur 11 étant lui-même configuré pour être monté sensiblement immobile en rotation par rapport au bâti 10 autour de l'axe de rotation A12 de l'outil de coupe 12 sur lui-même, ledit corps cylindrique creux comprenant une paroi cylindrique intérieure 13i d'axe A13i, et une paroi cylindrique extérieure 13e d'axe A13e, l'axe A13i de la paroi cylindrique intérieure 13i étant décalé d'un distance E13 par rapport à l'axe A13e de la paroi cylindrique extérieure 13e,
   - un deuxième excentrique 14, extérieur, comprenant un corps cylindrique creux recevant le premier excentrique 13, monté mobile en rotation par rapport au deuxième excentrique 14, le deuxième excentrique comprenant une paroi cylindrique intérieure 14i d'axe A14i, et une paroi cylindrique extérieure 14e d'axe A14e, l'axe A14i de la paroi cylindrique intérieure 14i étant décalé d'une distance E14 par rapport à l'axe A14e de la paroi cylindrique extérieure 14e,
   - un corps de référence 15, solidaire du bâti 10, comprenant une paroi cylindrique intérieure 15i d'axe A15, recevant le deuxième excentrique 14 monté mobile en rotation par rapport au corps de référence 15,
   - un premier moyen d'entraînement 130 configuré pour entraîner en rotation le premier excentrique 13 par rapport au bâti 10,
   - un deuxième moyen d'entraînement 140, distinct du premier moyen d'entraînement 130, configuré pour entraîner en rotation le deuxième excentrique 14 par rapport au bâti 10,
(b) réalisation d'un perçage à la forme et aux dimensions souhaitées par le parcours par l'outil de coupe 12 d'une trajectoire T déterminée, avec :
   - mise en rotation de l'outil de coupe 12 autour de son axe A12 par l'action du moteur 11,
   - mises en rotations continues et simultanées du premier excentrique 13 par rapport au bâti 10 par le premier moyen d'entraînement 130 à une vitesse de rotation ω13, et du deuxième excentrique 14 par rapport au bâti à une vitesse de rotation ω14 par le deuxième moyen d'entraînement 140, de sorte que l'outil de coupe 12 effectue également une rotation R12 autour de l'axe A15 du corps de référence 15 de rayon D12, correspondant à la distance séparant l'axe A15 du corps de référence 15 de l'axe de rotation A12 de l'outil de coupe 12 sur lui-même,
      et
   - pilotage en continu et simultanément de la position angulaire Θ13 et de la vitesse de rotation ω13 par rapport au bâti 10 du premier excentrique 13, et de la position angulaire Θ14 et de la vitesse de rotation ω14 par rapport au bâti 10 du deuxième excentrique 14, de telle sorte que l'outil de coupe 12 suive ladite trajectoire T déterminée, située dans une zone Z12 définie entre le cercle C, centré sur l'axe A15 et de rayon |E13-E14|, et le cercle C', centré sur l'axe A15 et de rayon E13+E14,
et lequel le procédé convient pour reproduire n'importe quelle trajectoire T de l'outil de coupe 12 dans ladite zone Z12 par contrôle en continu du décalage angulaire Θ14- Θ13 entre la position angulaire Θ13 par rapport au bâti 10 du premier excentrique 13 et la position angulaire Θ14 par rapport au bâti 10 du deuxième excentrique 14.

Ainsi, grâce à un tel procédé, il est possible d'ajuster en temps réel, au cours de l'opération de perçage de la pièce, la trajectoire orbitale de l'outil de coupe 12 autour de l'axe A15 du corps de référence, de sorte à ce qu'il suive la trajectoire T déterminée pour obtenir la forme du perçage souhaité.

Comme visible sur la figure 4, le décalage angulaire Θ14-Θ13 entre les deux excentriques 13, 14 déterminera directement les caractéristiques de la trajectoire orbitale T parcourue par l'outil de coupe 12 au cours du procédé de perçage orbital.

Comme visible sur l'exemple de réalisation de la figure 7, il est ainsi possible de réaliser dans une pièce des perçages avec une grande variété de formes déterminées, comprises dans ladite zone Z12, par exemple un disque, un anneau ou encore une droite, à titre d'exemples non limitatifs

Comme visible sur l'exemple de réalisation de la figure 4, le décalage angulaire Θ13 du premier excentrique 13 par rapport au bâti 10 correspond à l'inclinaison de la droite passant par l'axe A13i de la paroi intérieure 13i et l'axe A13e de la paroi extérieure 13e par rapport à un axe horizontal A15X de référence du bâti 10, tandis que le décalage angulaire Θ14 du deuxième excentrique 14 par rapport au bâti 10 correspond à l'inclinaison de la droite passant par l'axe A14i de la paroi intérieure 14i et l'axe A14e de la paroi extérieure 14e par rapport à un axe horizontal A15X de référence du bâti 10.

Comme visible sur la figure 5, au cours du procédé de perçage orbital, l'outil de coupe 12, et plus particulièrement ses arêtes de coupe, peut parcourir une trajectoire, orbitale, résultant de la combinaison :
- d'une rotation de l'outil de coupe 12 autour de son axe A12, et
- d'une rotation R12 de l'outil de coupe 12 autour de l'axe A15 du corps de référence 15, décalé radialement par rapport à l'axe A12 de l'outil de coupe 12.

Le décalage radial D12 entre l'axe de rotation A12 de l'outil de coupe 12 sur lui-même et l'axe A15 du corps de référence 15 correspond au rayon D12 de la rotation R12.

Ainsi, en modifiant le décalage angulaire Θ14-Θ13 entre le premier excentrique 13 et le deuxième excentrique 14, on peut faire varier leur position relative, et donc le rayon D12 de la rotation R12 de l'outil de coupe 12, définissant la trajectoire parcourue par l'outil de coupe 12.

Avantageusement, le contrôle du décalage angulaire Θ14-Θ13 et de la vitesse de rotation ω13 du premier excentrique 13 par rapport au bâti 10 et de la vitesse de rotation ω14 du deuxième excentrique 14 par rapport au bâti 10 peut être réalisé de façon dynamique au cours du procédé de perçage par des moyens de contrôle, comprenant par exemple un circuit de commande électronique (non visible sur les figures). Ledit circuit de commande peut par exemple être logé dans un boîtier solidaire du bâti 10.

L'outil de coupe 12 peut par exemple être une fraise.

Le moteur 11 peut être de forme cylindrique, et, afin de faciliter le pilotage du procédé, être un moteur électrique.

Avantageusement, le moteur électrique 11 comprend un stator et un rotor, ledit moteur 11 étant par exemple un moteur à rotor externe, afin de disposer d'un couple moteur important.

Afin de faciliter la rotation du premier excentrique 13 par rapport au deuxième excentrique 14 et/ou du deuxième excentrique 14 par rapport au corps de référence 15 du bâti 10, il peut être prévu des roulements (non représentés) entre la paroi extérieure 13e du premier excentrique 13, et la paroi intérieure 14i du deuxième excentrique 14, respectivement entre la paroi extérieure 14e du deuxième excentrique 14 et la paroi intérieure 15i du corps de référence 15.

Alternativement, les vitesses de rotation ω13 du premier excentrique 13 par rapport au bâti 10 et ω14 du deuxième excentrique 14 par rapport au bâti 10 demeurant faibles par rapport à la vitesse de rotation de l'outil 12 autour de son axe A12, aucun moyen de guidage supplémentaire n'est prévu entre la paroi extérieure 13e du premier excentrique 13, et la paroi intérieure 14i du deuxième excentrique 14 amenées à glisser l'une sur l'autre et/ou entre la paroi extérieure 14e du deuxième excentrique 14 et la paroi intérieure 15i du corps de référence 15 amenées à glisser l'une sur l'autre, le premier excentrique 13, le deuxième excentrique 14 et/ou le corps de référence 15 étant configurés comme des paliers lisses, c'est-à-dire fabriqués avec des tolérances de fabrication telles et dans matériaux tels, que le frottement entre leurs différentes surfaces d'interaction est minimal.

Le premier excentrique 13 et le deuxième excentrique 14 peuvent ainsi être des pièces monoblocs, par exemple en bronze, ou en un alliage à base de bronze, ou encore en acier ou en un alliage à base d'acier.

La vitesse de rotation ω13 du premier excentrique 13 par rapport au bâti 10 et la vitesse de rotation ω14 du deuxième excentrique 14 par rapport au bâti 10 sont déterminées en fonction des différentes positions angulaires Θ13, Θ14 prises par le premier excentrique 13 et par le deuxième excentrique 14 pour le parcours par l'outil de coupe 12 de ladite trajectoire T déterminée et par la vitesse de rotation de l'outil de coupe 12 autour de l'axe A15 de sorte à permettre le perçage dans la pièce avec une qualité de fabrication satisfaisante.

Selon un mode de réalisation, dans le procédé :
- on définit une pluralité de points Mₙ appartenant à ladite trajectoire déterminée T, et on détermine, pour chaque point Mₙ, la position angulaire Θ13ₙ du premier excentrique 13 par rapport au bâti 10 et la position angulaire Θ14ₙ du deuxième excentrique 14 par rapport au bâti 10 permettant à l'outil de coupe 12 d'atteindre chacun des points Mₙ de la trajectoire T au cours de sa rotation autour de l'axe A15 du corps de référence 15, et
- on pilote en continu et simultanément la position angulaire Θ13 et la vitesse de rotation ω13 par rapport au bâti 10 du premier excentrique 13, et la position angulaire Θ14 et la vitesse de rotation Θ14 par rapport au bâti 10 du deuxième excentrique 14, avec contrôle du décalage angulaire Θ14-Θ13, de sorte que l'outil de coupe 12 passe par chacun des points Mₙ de la trajectoire T au cours de sa rotation autour de l'axe A15 du corps de référence 15.

Dans le tableau ci-dessous, on a représenté différents points Mₙ de la trajectoire T parcourue par l'outil de coupe 12 permettant de réaliser un perçage de forme elliptique, représenté sur l'exemple de réalisation de la figure 4, avec pour chacun desdits points Mₙ :
- la position angulaire Θ13ₙ du premier excentrique 13 par rapport au bâti 10,
- la position angulaire Θ14ₙ du deuxième excentrique 14 par rapport au bâti 10,
- le décalage angulaire (Θ14-Θ13)ₙ entre le premier excentrique 13 et le deuxième excentrique 14,
- la vitesse de rotation ω13ₙ du premier excentrique 13 par rapport au bâti 10,
- la vitesse de rotation ω14ₙ du deuxième excentrique 14 par rapport au bâti 10,
- le rayon D12ₙ de la rotation R12 de l'outil de coupe 12 autour de l'axe A15 du corps de référence 15.

| **Point** | **θ13** | **θ14** | **θ14-θ13** | **ω13** | **ω14** | **D12** |
|---|---|---|---|---|---|---|
| M₁ | θ13₁ | θ14₁ | (θ14-θ13)₁ | ω13₁ | ω14₁ | D12₁ |
| M₂ | θ13₂ | θ14₂ | (θ14-θ13)₂ | ω13₂ | ω14₂ | D12₂ |
| \| | | | | | | |
| \| | | | | | | |
| Mₙ | θ13ₙ | θ14ₙ | (θ14-θ13)ₙ | ω13ₙ | ω14ₙ | D12ₙ |

Afin d'obtenir un perçage avec des contours réguliers, il peut être avantageux de définir un nombre important de points Mₙ de ladite trajectoire T déterminée.

Selon un mode de réalisation, l'écart E13 entre l'axe A13i de la paroi intérieure 13i et l'axe A13e de la paroi extérieure 13e du premier excentrique 13 est égal à l'écart E14 entre l'axe A14i de la paroi intérieure 14i et l'axe A14e de la paroi extérieure 14e du deuxième excentrique 14. Le rayon D12 de la rotation R12 de l'outil de coupe 12 autour de l'axe A15 du corps de référence 15 peut ainsi prendre une valeur nulle, lorsque la valeur absolue du décalage radial Θ14-Θ13 est égale à 180°. Le procédé convient ainsi pour reproduire n'importe quelle trajectoire T de l'outil de coupe 12 dans ladite zone Z12 formant un disque, centrée sur l'axe A15 du corps de référence 15, de rayon E13+E14.

Ainsi, le rayon D12 de la rotation de l'outil de coupe 12 autour de l'axe A15 du corps de référence 15 peut varier entre une valeur nulle et une valeur maximale correspondant au rayon E13+14 du cercle C' définissant ladite zone Z12.

Lorsque le rayon D12 de la rotation R12 est nul, la trajectoire T parcourue par l'outil de coupe 12 ne comprend que la rotation de l'outil de coupe 12 sur lui-même et permet la réalisation de perçages dont le diamètre correspond sensiblement à celui de l'outil de coupe 12.

Dans un tel mode de réalisation, afin d'obtenir un rayon D12 nul, il suffit de positionner le premier excentrique 13 de telle sorte que l'axe A14e de la paroi extérieure 14e du deuxième excentrique 14 coïncide avec l'axe A13i de la paroi intérieure 13i du premier excentrique 13. L'excentricité du deuxième excentrique 14 et du premier excentrique 13 vont alors s'annuler, et l'axe de rotation A12 de l'outil de coupe 12 sur lui-même coïncide alors avec l'axe A14e de la paroi extérieure 14e du deuxième excentrique 14.

La valeur minimale dudit rayon D12 correspond à un décalage angulaire Θ14-Θ13 de valeur absolue 180° tandis que la valeur maximale du rayon D12 correspond à un décalage angulaire Θ14-Θ13 de valeur nulle.

A titre indicatif, l'excentricité E13 du premier excentrique 13 peut être comprise entre 0,1 et 1 mm.

A titre indicatif, l'excentricité E14 du deuxième excentrique 14 peut être comprise entre 0,1 et 1 mm.

Selon un mode de réalisation, la trajectoire T déterminée comprend, au moins sur une section, une trajectoire circulaire TC, et dans le procédé, on pilote la position angulaire Θ13 et la vitesse de rotation ω13 du premier excentrique 13 par rapport au bâti 10 et la position angulaire Θ14 et la vitesse de rotation ω14 du deuxième excentrique 14 par rapport au bâti 10, de telle sorte que le décalage angulaire Θ14-Θ13 demeure constant lors de la rotation de l'outil de coupe 12 autour de l'axe A15 du corps de référence 15 de sorte à ce que l'outil de coupe 12 décrive une rotation R12 autour de l'axe A15 du corps de référence 15 de rayon D12 constant et suive ladite trajectoire circulaire TC.

Grâce à cette disposition avantageuse, il est possible de réaliser un perçage comprenant au moins une section en forme de disque ou en forme d'anneau.

Selon un mode de réalisation, la trajectoire T déterminée comprend, au moins sur une section, une trajectoire non circulaire TNC, et dans lequel on pilote la position angulaire Θ13 et la vitesse de rotation ω13 du premier excentrique 13 par rapport au bâti 10 et la position angulaire Θ14 et la vitesse de rotation ω14 du deuxième excentrique 14 par rapport au bâti 10, de telle sorte que le décalage angulaire Θ14-Θ13 varie lors de la rotation de l'outil de coupe 12 autour de l'axe A15 du corps de référence 15 de sorte à ce que l'outil de coupe 12 décrive une rotation R12 autour de l'axe A15 du corps de référence 15 de rayon D12 variable et suive ladite trajectoire non circulaire TNC.

Ainsi, comme visible sur l'exemple de réalisation de la figure 7, la trajectoire T peut comprendre au moins une section circulaire TC et une section non circulaire TNC pour la réalisation de perçages de forme complexe.

Grâce à cette disposition avantageuse, il est alors possible de réaliser un perçage de forme complexe, comportant au moins une section non circulaire de façon simple, sans recourir à une cinématique complexe, prévoyant par exemple l'emploi d'une table XY, à la commande complexe.

Selon un mode de réalisation, le dispositif de perçage orbital 1 comprend en outre des moyens 16 d'entraînement en translation de l'outil de coupe 12, selon une direction parallèle à l'axe de rotation A12 de l'outil de coupe 12 sur lui-même, afin de permettre le déplacement en translation de l'outil de coupe 12.

Selon ce mode de réalisation, les moyens 16 d'entraînement en translation comprennent un système vis/écrou, comprenant une tige filetée 161 entraînée en rotation par l'intermédiaire d'un moteur 162 et un écrou monté mobile en translation par rapport au bâti 10, ladite tige filetée 162 étant reçue dans ledit écrou.

Selon ce mode de réalisation, on entraîne en translation l'outil de coupe 12 par l'intermédiaire des moyens 16 d'entraînement en translation au cours de l'étape (b) du procédé.

Comme visible plus particulièrement sur l'exemple de réalisation des figures 1 et 3, ladite vis 161 est disposée parallèlement à l'axe de rotation A12 du moteur 11, correspondant à l'axe de rotation A12 de l'outil de coupe 12 sur lui-même.

L'écrou dudit système vis/écrou est prévu pour être disposé sur un élément distinct du dispositif de perçage orbital 1 selon l'invention, et notamment du bâti 10 du dispositif de perçage orbital 1.

L'emploi d'un tel système vis/écrou permet d'obtenir un perçage à la profondeur souhaitée, de façon précise.

L'invention concerne un dispositif 1 de perçage orbital comprenant, sur un même bâti 10 :
- un moteur 11,
- un outil de coupe 12 entraîné en rotation sur lui-même par ledit moteur 11, autour de son axe de rotation A12,
- un premier excentrique 13, intérieur, comprenant un corps cylindrique creux recevant ledit moteur 11, le premier excentrique 13 étant configuré pour être monté mobile par rapport au moteur 11, ledit moteur 11 étant configuré pour être monté immobile en rotation par rapport au bâti 10 autour de l'axe de rotation A12 de l'outil de coupe 12 sur lui-même, le premier excentrique 13 comprenant une paroi cylindrique intérieure 13i d'axe A13i et une paroi cylindrique extérieure 13e d'axe A13e, l'axe A13i de la paroi cylindrique intérieure 13i étant décalé d'une distance E13 par rapport à l'axe de la paroi cylindrique extérieure,
- un deuxième excentrique 14, extérieur, comprenant un corps cylindrique creux recevant le premier excentrique 13, monté mobile en rotation par rapport au deuxième excentrique 14, le deuxième excentrique 14 comprenant une paroi cylindrique intérieure 14i d'axe A14i et une paroi cylindrique extérieure 14e d'axe A14e, l'axe A14i de la paroi cylindrique intérieure 14i étant décalé d'une distance E14 par rapport à l'axe A14e de la paroi cylindrique extérieure 14e,
- un corps de référence 15, solidaire du bâti 10, comprenant une paroi cylindre intérieure 15i d'axe A15, recevant le deuxième excentrique 14 monté mobile en rotation par rapport au corps de référence,
- un premier moyen d'entraînement 130, configuré pour entraîner en rotation le premier excentrique 13 par rapport au bâti 10, à une vitesse de rotation ω13,
- un deuxième moyen d'entraînement 140 configuré pour entraîner en rotation le deuxième excentrique par rapport au bâti 10 à une vitesse de rotation ω14, simultanément à la rotation du premier excentrique 13 par rapport au bâti 10,
- des moyens de pilotage configurés pour la réalisation d'un perçage à la forme et aux dimensions souhaitées par le parcours par l'outil de coupe 12 d'une trajectoire T déterminée, par la mise en oeuvre des étapes suivantes :
   - mise en rotation de l'outil de coupe 12 sur lui-même autour de son axe de rotation A 12,
   - mises en rotations continues et simultanées du premier excentrique 13 par rapport au bâti 10 à une vitesse de rotation ω13, et du deuxième excentrique 14 par rapport au bâti 10 à une vitesse de rotation ω14, de sorte que l'outil de coupe 12 effectue également une rotation R12 autour de l'axe A15 du corps de référence 15 de rayon D12, correspondant à la distance séparant l'axe A15 du corps de référence 15 de l'axe de rotation A12 de l'outil de coupe 12 sur lui-même,
      et
   - pilotage en continu et simultanément de la position angulaire Θ13 et de la vitesse de rotation ω13 par rapport au bâti 10 du premier excentrique 13, et de la position angulaire Θ14 et de la vitesse de rotation ω14 par rapport au bâti 10du deuxième excentrique 14, de telle sorte que l'outil de coupe 12 suive ladite trajectoire T déterminée, située dans une zone Z12 définie entre le cercle C, centré sur l'axe A15 et de rayon IE13-E141, et le cercle C', centré sur l'axe A15 et de rayon E13+E14.

Selon l'invention, lesdits moyens de pilotage conviennent pour reproduire n'importe quelle trajectoire T de l'outil de coupe 12 dans ladite zone Z12 par contrôle en continu, au cours du perçage, du décalage angulaire Θ14 - Θ13, entre la position angulaire Θ13 par rapport au bâti 10 du premier excentrique 13 et la position angulaire Θ14 par rapport au bâti 10 du deuxième excentrique 14.

Un tel dispositif de perçage orbital 1 est apte à mettre en oeuvre le procédé décrit précédemment.

Ainsi, l'ensemble des dispositions et des avantages décrits précédemment concernant le dispositif de perçage orbital 1 mettant en oeuvre le procédé de perçage orbital décrit précédemment, et fourni au cours des étapes (a) et (b) dudit procédé, s'appliquent au dispositif de perçage orbital 1 selon l'invention.

Un tel dispositif de perçage orbital 1, visible par exemple sur les figures 1 et 3 peut par exemple être prévu comme un dispositif amovible, par exemple portatif, pouvant être porté et manipulé par un opérateur. Un bâti supplémentaire (non représenté) peut alors être prévu afin d'améliorer l'ergonomie du dispositif de perçage orbital 1 et faciliter sa manipulation.

Alternativement, un tel dispositif de perçage orbital 1 peut être prévu pour être disposé sur une machine-outil, ou encore sur un bras robotisé, par l'intermédiaire de moyens de fixation appropriés.

Comme visible sur l'exemple de réalisation des figures 1, 2a et 3, le moteur 11 entraînant l'outil de coupe 12 autour de son axe de rotation A12 est logé intégralement dans le premier excentrique 13, i.e. sans s'étendre radialement ou longitudinalement à l'extérieur de celui-ci, de sorte à avantageusement diminuer l'encombrement longitudinal du dispositif de perçage orbital 1 selon l'invention, selon l'axe A15 du corps de référence 15, et notamment par rapport aux dispositifs décrits dans les documents US 2003/0017017 A1 et WO 2004/113002 A1, dans lesquels le moteur entraînant l'outil de coupe en rotation est largement dépassant longitudinalement du corps cylindrique intérieur, sur la partie arrière du dispositif de perçage orbital, à savoir opposé à l'outil de coupe.

Le fait que le moteur 11 entraînant l'outil de coupe 12 en rotation soit logé intégralement, dans le premier excentrique 13, peut permettre avantageusement que ce moteur 11 n'empiète pas sur la partie arrière du corps de référence 15, sur laquelle peuvent être disposés le premier moyen d'entraînement 130 et le deuxième moyen d'entraînement 140, en limitant l'encombrement longitudinal selon l'axe A15 du corps de référence 15, mais encore avantageusement l'encombrement radial, selon une direction radiale par rapport à l'axe A15 du corps de référence 15.

Selon l'invention, le premier moyen d'entraînement 130 comprend une première couronne dentée 131 périphérique, montée rotative autour de l'axe du corps de référence 15, solidaire en rotation du premier excentrique 13, et un moteur 132, solidaire du bâti 10, avec un pignon denté 133 monté sur l'arbre d'entraînement du moteur 132 venant engrener avec ladite première couronne dentée 131, la première couronne dentée 131 et le premier excentrique 131 étant solidaires par l'intermédiaire d'un joint d'Oldham 134 afin de compenser le désaxement entre la première couronne dentée 131 et le premier excentrique 13.

Cette disposition avantageuse de l'invention permet d'assurer l'entraînement en rotation du premier excentrique 13 par rapport au bâti 10 de façon précise et fiable au cours du temps, et notamment par rapport aux dispositifs de l'état de la technique employant une courroie de transmission, ce qui permet d'ajuster de façon précise la position angulaire Θ13 et la vitesse de rotation ω13 du premier excentrique 13 par rapport au bâti 10, ainsi que sa position relative par rapport au deuxième excentrique 14, et donc le rayon D12 de la rotation R12 de l'outil de coupe 12 autour de l'axe A15 du corps de référence 15.

Comme visible sur l'exemple de réalisation de la figure 2a, grâce à cette disposition avantageuse de l'invention, la position de l'axe de rotation A131 de la couronne dentée 131 sur elle-même demeure fixe par rapport à l'axe de rotation A133 du pignon denté 133 sur lui-même, tandis que la position de l'axe de rotation A13i du premier excentrique 13 par rapport au bâti 10 varie par rapport à l'axe de rotation A131 de la couronne dentée 131 sur elle-même.

Le joint d'Oldham permet de transmettre le mouvement de rotation de ladite couronne dentée 131 au premier excentrique 13, en compensant le décalage entre l'axe de rotation A131 de la couronne dentée 131 et l'axe de rotation A13i du premier excentrique 13.

L'emploi d'un joint d'Oldham permet de diminuer l'encombrement d'un tel dispositif de perçage orbital 1, notamment en comparaison avec l'emploi d'un double joint de Cardan, ou encore par comparaison avec le système de transmission de mouvement de conception particulièrement complexe employé dans le dispositif de perçage décrit dans le document WO 2004/113002 A1.

Selon l'invention, le deuxième moyen d'entraînement 140 comprend une deuxième couronne dentée 141 périphérique, solidaire et coaxiale à la paroi cylindrique extérieure 14e du deuxième excentrique 14 et un moteur 142 avec un pignon denté 143 monté sur l'arbre d'entraînement du moteur et venant engrener avec ladite couronne dentée 141.

Cette disposition avantageuse de l'invention permet d'assurer l'entraînement en rotation du deuxième excentrique 14 par rapport au bâti 10 de façon précise et fiable au cours du temps, et notamment par rapport aux dispositifs de l'état de la technique employant une courroie de transmission, ce qui permet d'ajuster de façon précise la position angulaire Θ14 et la vitesse de rotation ω14 du deuxième excentrique 14 par rapport au bâti 10, ainsi que sa position relative par rapport au premier excentrique 13, et donc le rayon D12 de la rotation R12 de l'outil de coupe 12 autour de l'axe A15 du corps de référence 15.

Ladite couronne dentée 141 peut être ménagée d'un seul tenant avec la paroi extérieure 14e du deuxième excentrique 14, ou être réalisée sous la forme d'une pièce séparée.

Afin de faciliter le pilotage du dispositif de perçage orbital 1 selon l'invention, le moteur 132 du premier moyen d'entraînement 130 et le moteur 142 du deuxième moyen d'entraînement 140 peuvent être des moteurs électriques, par exemple identiques, voire identiques au moteur 11 entraînant l'outil de coupe 12 en rotation sur lui-même.

Egalement, comme visible sur les exemples de réalisation des figures 1, 2a, 3 et 8, l'emploi de couronnes dentées 131, 141 coopérants avec des pignons dentés 133, 143 permet de diminuer le décalage radial entre les axes de rotation A132, A142 de chacun des rotors des moteurs 132, 142 et l'axe de rotation A12 du moteur 11, selon une direction radiale du premier excentrique 13 ou du deuxième excentrique 14.

L'emploi d'engrenages permet avantageusement de diminuer l'encombrement radial du dispositif de perçage 1 selon l'invention, et notamment par rapport aux dispositifs de perçage employant un moteur coopérant avec une courroie et une poulie, comme décrits dans les documents US 2003/0017017 A1 ou WO 2004/113002 A1.

Selon l'invention, le moteur 132 du premier moyen d'entraînement 130 et le moteur 142 du deuxième moyen d'entraînement 140 sont fixés sur une même paroi de fixation F10, solidaire du bâti 10.

Avantageusement, et afin d'équilibrer la répartition du poids des moteurs 132, 142 sur le bâti 10, le moteur 132 du premier moyen d'entraînement 130 et le moteur 142 du deuxième moyen d'entraînement 140 sont disposés avec leurs arbres d'entraînement A132, A142 parallèles, et de part et d'autre, à équidistance de l'axe A15 du corps de référence 15.

Egalement, comme visible sur l'exemple de réalisation de la figure 1, et quand les moteurs 132, 142 du premier et du deuxième moyen d'entraînement 13, 14 sont notamment identiques, afin de diminuer l'encombrement longitudinal du dispositif de perçage 1 selon l'invention, lesdits moteurs 132, 142 du premier et du deuxième moyen d'entraînement 13, 14 peuvent être prévus juxtaposés longitudinalement selon l'axe A15 du corps principal 15, en recouvrement total ou partiel selon ledit axe A15.

Selon un mode de réalisation, la première couronne dentée 131 du premier moyen d'entraînement 130 et la deuxième couronne dentée 141 du deuxième moyen d'entraînement 140 sont identiques, présentant un même diamètre, un même nombre de dents, et un même pas et profil de denture.

De la même façon, si les moteurs 132, 142 sont disposés de part et d'autre de l'axe A15 du corps de référence 15, et à équidistance de l'axe A15 du corps de référence, et les pignons 133, 143, montés sur leurs arbres d'entraînement respectifs peuvent également être identiques, présentant un même diamètre, un même nombre de dents, et un même pas et profil de denture.

Ainsi, l'ajustement des positions angulaires Θ13, Θ14 et des vitesses de rotation ω13 et ω14, est plus aisé à piloter, en ce que les vitesses de rotation ω13 et ω14 seront identiques pour des vitesses de rotation identiques des arbres d'entraînement A132, A142 des moteurs 132, 142.

Selon un l'invention, le moteur 132 du premier moyen d'entraînement 130 et le moteur 142 du deuxième moyen d'entraînement 140 peuvent avantageusement être disposés décalés longitudinalement, selon l'axe A15 du corps de référence 15, par rapport au moteur 11 entraînant l'outil de coupe 12 en rotation, le moteur 11 entraînant l'outil de coupe 12, reçu dans le premier excentrique 13, étant positionné en position longitudinale intermédiaire entre l'outil de coupe 12 et les moteurs 132, 142 du premier moyen d'entraînement 130 et du deuxième moyen d'entraînement 140, le moteur 132 du premier moyen d'entraînement 130 et le moteur 142 du deuxième moyen d'entraînement 140 étant chacun, au moins partiellement, en recouvrement radial par rapport au rayon R14e de la paroi cylindrique extérieure 14e du deuxième excentrique 14.

Ainsi, comme visible sur les exemples de réalisation des figures 1, 3 et 8, cette disposition avantageuse de l'invention, l'encombrement radial du dispositif de perçage 1 selon ce mode de réalisation de l'invention, selon une direction radiale par rapport à l'axe A15 du corps de référence 15, peut être diminuée en permettant le rapprochement entre les axes de rotation A132, A142 des moteurs 132, 142 du premier 130 et du deuxième moyen d'entraînement 140 et l'axe de rotation A12 du moteur 11 entraînant l'outil de coupe 12 en rotation, et notamment par rapport aux dispositifs de perçage de l'état de la technique employant des moteurs coopérant avec une courroie et une poulie pour l'entraînement des excentriques, comme par exemple ceux décrits dans les documents US 2003/0017017 A1 et WO 2004/113002 A1, pour lesquels un tel recouvrement radial n'est pas possible.

Selon un mode réalisation, le moteur 132 du premier moyen d'entraînement 130 et/ou le moteur 142 du deuxième moyen d'entraînement 140, présente une ou plusieurs des caractéristiques suivantes :
--moteur basse tension, notamment inférieure à 48 volts,
-- moteur électrique brushless,
-- moteur à rotor externe,
-- rapport poids puissance supérieur à 5W/g,
-- employant une technologie d'aimants à haut point de Curie, notamment sensiblement égal à 200° environs,
-- présentant des fils de bobinage dont les isolants peuvent supporter des températures de 180°C.

L'emploi d'un moteur 132, 142 à rotor externe permet notamment de bénéficier d'un couple moteur important tout en minimisant l'encombrement d'un tel moteur 132, 142. Un moteur 132, 142 avec l'une ou l'autre des caractéristiques ci-dessus, et en particulier avec toutes ces caractéristiques, est notamment de dimensions réduites et poids réduit, ce qui permet avantageusement de diminuer l'encombrement, longitudinal selon l'axe A15 du corps de référence 15, et selon une direction radiale, par rapport à l'axe A15 du corps de référence 15 du dispositif de perçage 1 selon l'invention, tout en facilitant sa manipulation et en garantissant un entraînement du premier excentrique 13 et/ou du deuxième excentrique 14 avec une puissance suffisante pour le fonctionnement optimal du dispositif de perçage 1 selon l'invention, et avec une consommation d'énergie réduite, ce qui diminue le coût de fonctionnement du dispositif de perçage 1 selon l'invention, et notamment par rapport aux dispositifs de perçage de l'état de la technique, comme par exemple ceux décrits dans les documents US 2003/0017017 A1 ou WO 2004/113002.

Selon un mode de réalisation, ledit dispositif de perçage orbital 1 comprend en outre des moyens 16 d'entraînement en translation de l'outil de coupe 12, selon une direction parallèle à l'axe de rotation A12 de l'outil de coupe 12 sur lui-même, afin de permettre le déplacement en translation de l'outil de coupe 12.

Selon un mode de réalisation, les moyens 16 d'entraînement en translation comprennent un système vis/écrou, comprenant une tige filetée 161 entraînée en rotation par l'intermédiaire d'un moteur 162 et un écrou mobile en translation par rapport au bâti 10, ladite tige filetée 161 étant reçue dans ledit écrou.

Le moteur 162 peut être relié à un moyen de commande, par exemple un circuit électronique de commande, permettant de piloter la rotation du moteur 162 de sorte à obtenir le déplacement en translation de l'outil de coupe 12 selon une distance souhaitée, pour obtenir la profondeur du perçage souhaitée.

Avantageusement, et afin de faciliter le pilotage du dispositif de perçage orbital selon l'invention, le moteur 162 peut être un moteur électrique.

Selon un mode de réalisation, le moteur 162 des moyens d'entraînement en translation est fixé sur ladite paroi de fixation F10 du bâti 10.

Selon un mode de réalisation, le moteur 162 des moyens 16 d'entraînement en translation est disposé décalé longitudinalement, selon l'axe A15 du corps de référence 15, par rapport au moteur 11 entraînant l'outil de coupe 12 en rotation, le moteur 11 entraînant l'outil de coupe 12, reçu dans le premier excentrique 13, étant positionné en position intermédiaire entre l'outil de coupe 12 et les moteurs 132, 142, 162 du premier moyen d'entraînement 130, du deuxième moyen d'entraînement 140 et des moyens d'entraînement 160 en translation, le moteur 162 des moyens 16 d'entraînement en translation étant également, au moins partiellement, en recouvrement radial par rapport au rayon R14e de la paroi cylindrique extérieure 14e du deuxième excentrique 14.

Ainsi, comme visible sur les exemples de réalisation des figures 1, 3 et 8, grâce à cette disposition avantageuse de l'invention, l'encombrement radial du dispositif de perçage 1 selon l'invention, selon une direction radiale par rapport à l'axe A15 du corps de référence 15, peut être diminuée en permettant le rapprochement entre l'axe de rotation A162, du moteur 162 des moyens 16 d'entraînement en translation et l'axe de rotation A12 du moteur 11 entraînant l'outil de coupe 12 en rotation, et notamment par rapport aux dispositifs de perçage de l'état de la technique employant des moteurs coopérant avec une courroie et une poulie pour l'entraînement des excentriques, comme par exemple ceux décrits dans les documents US 2003/0017017 A1 et WO 2004/113002 A1, pour lesquels un tel recouvrement radial n'est pas possible.

Avantageusement, le moteur 162 des moyens 16 d'entraînement en translation peut être identique aux moteurs 132, 142 du premier 130 et du deuxième moyen d'entraînement 140, voire au moteur 11 entraînant l'outil de coupe 12 en rotation sur lui-même.

Egalement, comme visible sur les exemples de réalisation des figures 1, 3 et 8, afin de diminuer l'encombrement longitudinal du dispositif de perçage 1 selon l'invention, ledit moteur 162 des moyens 16 d'entraînement en translation peut être prévu juxtaposés longitudinalement selon l'axe A15 du corps principal 15 avec les moteurs 132, 142 du premier 13 et du deuxième moyen d'entraînement 14, en recouvrement total ou partiel selon l'axe longitudinal avec les moteurs 132, 142 du premier 13 et du deuxième moyen d'entraînement 14.

Comme visible sur l'exemple de réalisation de la figure 8, afin de diminuer l'encombrement du dispositif de perçage 1 selon l'invention et d'améliorer son équilibrage, avec une répartition uniforme du poids, les moteurs 132, 142, 162 du premier 130 et du deuxième moyen d'entraînement 140 et des moyens 16 d'entraînement en translation peuvent être disposés sur ladite paroi de fixation F10 du bâti 10 de telle sorte que les axes de rotation A132, A142, A162 de leurs rotors respectifs forment un triangle isocèle, avantageusement équilatéral, avec son centre de gravité disposé à proximité, de préférence sensiblement en coïncidence, de l'axe A15 du corps de référence 15.

Selon un mode de réalisation, le moteur 162 des moyens 16 d'entraînement en translation présente une ou plusieurs des caractéristiques suivantes :
--moteur basse tension, notamment inférieure à 48 volts,
-- moteur électrique brushless,
-- moteur à rotor externe,
-- rapport poids puissance supérieur à 5W/g,
-- employant une technologie d'aimants à haut point de Curie, notamment sensiblement égal à 200° environs,
-- présentant des fils de bobinage dont les isolants peuvent supporter des températures de 180°C.

L'emploi d'un moteur 162 à rotor externe permet notamment de bénéficier d'un couple moteur important tout en minimisant l'encombrement d'un tel moteur 162. Un moteur 162 avec l'une ou l'autre des caractéristiques ci-dessus, et en particulier avec toutes ces caractéristiques, est notamment de dimensions réduites, ce qui permet avantageusement de diminuer l'encombrement longitudinal, selon l'axe A15 du corps de référence 15, et selon une direction radiale, par rapport à l'axe A15 du corps de référence 15 du dispositif de perçage 1 selon l'invention, tout en garantissant un entraînement de l'outil de coupe 12 avec une puissance suffisante pour le fonctionnement optimal du dispositif de perçage 1 selon l'invention et avec une consommation d'énergie réduite, ce qui diminue le coût de fonctionnement du dispositif de perçage 1 selon l'invention, et notamment par rapport aux dispositifs de perçage de l'état de la technique, comme par exemple ceux décrits dans les documents US 2003/0017017 A1 ou WO 2004/113002.

Selon un mode de réalisation, la tige filetée 161 du système vis/écrou est monté en entraînement direct sur le rotor du moteur 16, rigidement solidaire du rotor.

Cette disposition avantageuse de l'invention permet d'améliorer la précision du perçage obtenu avec le dispositif de perçage orbital 1 selon l'invention, en ce que les incertitudes liées à l'emploi d'éléments de transmission (tels que des engrenages...) entre le rotor du moteur 16 et l'outil et la tige filetée 161 du système vis/écrou sont ainsi évitées.

Selon l'inventionf, le moteur 11 entraînant l'outil de coupe 12 en rotation sur lui-même comprend un stator et un rotor, l'outil de coupe 12 étant monté en entraînement direct sur ledit rotor dudit moteur 11, rigidement solidaire du rotor.

Cette disposition avantageuse de l'invention permet d'améliorer la précision du perçage obtenu avec le dispositif de perçage orbital 1 selon l'invention, en ce que les incertitudes liées à l'emploi d'éléments de transmission (tels que des engrenages...) entre le rotor du moteur 11 et l'outil de coupe 12 sont ainsi évitées.

L'outil de coupe 12 peut par exemple être fixé sur le rotor du moteur 11 par l'intermédiaire d'un porte-outil P12, comme visible sur l'exemple de réalisation des figures 1 et 3.

Selon un mode de réalisation, le moteur 11 entraînant l'outil de coupe 12 en rotation sur lui-même comprend des moyens de branchement 17, prévus pour être branchés à une alimentation en énergie, afin d'alimenter ledit moteur 11 en énergie, lesdits moyens de branchement 17 étant disposés à proximité d'une extrémité longitudinale arrière E11 du moteur 11, à l'opposé de l'outil de coupe 12.

Un doigt de branchement 18 est prévu, configuré pour recevoir en branchement lesdits moyen de branchement 17 du moteur 11, afin d'assurer la liaison de ladite source d'énergie audit moteur 11.

Le doigt de branchement 18 peut être relié au bâti 10 par l'intermédiaire de moyens de guidage G18, O10, configurés de sorte à autoriser une rotation du doigt de branchement 18 par rapport au bâti 10 autour d'un axe de rotation A18, avec un débattement angulaire limité, combinée à une translation dudit axe de rotation A18 selon une direction D18, sensiblement perpendiculaire à l'axe de rotation A18, sur une distance limitée, de sorte à sensiblement immobiliser le moteur 11 en rotation autour de l'axe de rotation A12 de l'outil de coupe 12 sur lui-même, avec un débattement angulaire limité, par l'intermédiaire des moyens de branchement 17.

On entend par débattement angulaire limité, un débattement angulaire inférieur à 30°, de préférence inférieur à 20° et par distance limitée, une distance inférieure à 5 mm, de préférence inférieure à 2mm, ou encore correspondant avantageusement au double du rayon d'excentration maximale (E13+E14) de l'outil de coupe 12 autour de l'axe A15 du corps de référence 15.

Grâce à cette disposition avantageuse de l'invention, les contraintes exercées sur les flexibles, et notamment les fils électriques, pour l'alimentation en énergie au niveau du doigt de branchement 18 sont limitées, et ils ne risquent pas non plus de s'enrouler sur eux-mêmes, ce qui empêche leur détérioration, tout en permettant audit doigt de branchement 18 de suivre le mouvement orbital, généré par les deux excentriques 13, 14, du moteur 11 autour de l'axe A15 du corps principal 15 lors du fonctionnement du dispositif 1 selon l'invention, tout en assurant sensiblement l'immobilisation du moteur 11 en rotation autour de l'axe de rotation A12 de l'outil de coupe 12 sur lui-même, c'est-à-dire avec un débattement angulaire limité, par l'intermédiaire des moyens de branchement 17.

De ce fait, il n'est pas nécessaire d'employer des connecteurs électriques tournants, complexes et onéreux, contrairement par exemple au dispositif décrit dans le document WO 2009/005446 A1.

Comme visible sur les exemples de réalisation des figures 3 et 6, ledit doigt de branchement 18 peut être monté sur la platine de fixation F10 du bâti 10. Ledit doigt de branchement 18 comprend par exemple une portion longitudinale L18 avec deux extrémités longitudinales E18, E18'. Au niveau d'une première extrémité longitudinale E18 de la portion longitudinale L18, le doigt de branchement 18 peut comprendre un plot de guidage G18, de forme sensiblement cylindrique d'axe correspondant à l'axe de rotation A18, prévu pour être reçu dans un trou oblong O10 ménagé sur ladite platine de fixation F10, dont la direction longitudinale correspond avantageusement à ladite direction de translation D18, le diamètre du trou oblong O10 étant avantageusement de rayon sensiblement identique à celui du plot de guidage 18.

Le plot de guidage G18 et ledit trou oblong O10 constituent ainsi avantageusement lesdits moyens de guidage configurés de sorte que ledit plot de guidage G18 puisse coulisser le long dudit trou oblong O10 sur ladite distance limitée, correspondant avantageusement à la longueur dudit trou oblong O10, tout en pivotant autour de l'axe de rotation A18 du plot de guidage G18, selon ledit débattement angulaire limité.

Au niveau de la deuxième extrémité longitudinale E18' de la portion longitudinale L18 du doigt de branchement 18 peuvent être disposés des moyens de connexion, et notamment des moyens de connexion électrique, configurés pour recevoir en branchement lesdits moyens de branchement 17 afin d'assurer l'alimentation en énergie par la source d'énergie, et notamment en énergie électrique, du moteur 11 par l'intermédiaire desdits moyens de branchement 17, et également d'assurer sensiblement l'immobilisation du moteur 11 en rotation autour de l'axe de rotation A12 de l'outil de coupe 12 sur lui-même, avec un débattement angulaire limité.

Avantageusement, le débattement angulaire du doigt de branchement 18 par rapport au bâti 10 autour de l'axe de rotation A18 et le débattement angulaire du moteur 11 autour de l'axe de rotation A12 de l'outil de coupe 12 sur lui-même, peuvent par exemple être identiques, et/ou peuvent chacun être inférieur à 30°, de préférence à 20°, tandis que la distance de déplacement en translation de l'axe de rotation A18 le long du trou oblong O10 peut, de manière avantageuse, correspondre sensiblement au double du rayon d'excentration maximale (E13+E14) de l'outil de coupe 12 autour de l'axe A15 du corps de référence 15, par exemple inférieure à 5mm, de préférence comprise entre 0,2mm et 2mm.

Naturellement, d'autres modes de réalisation auraient pu être envisagés par l'Homme du métier sans pour autant sortir du cadre de l'invention définie par les revendications ci-après.

### NOMENCLATURE

1. Dispositif de perçage orbital
10. Bâti
F10. Paroi de fixation
O10. Trou oblong
11. Moteur
E11. Extrémité longitudinale arrière
12. Outil de coupe
A12. Axe de rotation
P12. Porte-outil
R12. Rotation
D12. Rayon
Z12. Zone
13. Premier excentrique
Θ13. Position angulaire
E13. Ecartement (distance)
13i. Paroi intérieure
13e. Paroi extérieure
A13i, A13e. Axe
130. Premier moyen d'entraînement
131. Couronne dentée
132. Moteur
A132. Axe de rotation
133. Pignon
14. Deuxième excentrique
Θ14. Position angulaire
E14. Ecartement (distance)
14i. Paroi intérieure
14e. Paroi extérieure
R14e. Rayon
A14i, A14e. Axe
140. Deuxième moyen d'entraînement
141. Couronne dentée
142. Moteur
A142. Axe de rotation
143. Pignon
15. Corps de référence
A15. Axe
15i. Paroi intérieure
X. Axe horizontal de référence
Y. Axe vertical de référence
16. Moyens d'entraînement en translation
161. Tige filetée
162. Moteur
A162. Axe de rotation
17. Moyens de branchement
18. Doigt de branchement
E18, E18'. Extrémité longitudinale
L18. Portion longitudinale
G18. Plot de guidage
D18. Direction
P. Perçage
T. Trajectoire
TC. Section circulaire
TNC. Section non circulaire
ω13. Vitesse de rotation premier excentrique
ω14. Vitesse de rotation deuxième excentrique

## Revendications

1. Dispositif (1) de perçage orbital comprenant, sur un même bâti (10) :
- un moteur (11), électrique, comprenant un rotor et un stator
- un outil de coupe (12) entraîné en rotation sur lui-même par ledit moteur (11), autour de son axe de rotation (A12), l'outil de coupe (12) étant monté en entraînement direct sur ledit rotor dudit moteur (11), rigidement solidaire du rotor,
- un premier excentrique (13), intérieur, comprenant un corps cylindrique creux recevant, intégralement ledit moteur (11), ledit premier excentrique (13) étant configuré pour être monté mobile en rotation par rapport au moteur (11), ledit moteur (11) étant configuré pour être sensiblement immobile en rotation par rapport au bâti (10) autour de l'axe de rotation (A12) de l'outil de coupe (12) sur lui-même, le premier excentrique (13) comprenant une paroi cylindrique intérieure (13i) d'axe (A13i) et une paroi cylindrique extérieure (13e) d'axe (A13e), l'axe (A13i) de la paroi cylindrique intérieure (13i) étant décalé d'une distance (E13) par rapport à l'axe (A13e) de la paroi cylindrique extérieure (13e),
- un deuxième excentrique (14), extérieur, comprenant un corps cylindrique creux recevant le premier excentrique (13), monté mobile en rotation par rapport au deuxième excentrique (14), le deuxième excentrique (14) comprenant une paroi cylindrique intérieure (14i) d'axe (A14i) et une paroi cylindrique extérieure (14e) d'axe (A14e), l'axe (A14i) de la paroi cylindrique intérieure (14i) étant décalé par rapport à l'axe (A14e) de la paroi cylindrique extérieure (14e),
- un corps de référence (15), solidaire du bâti (10), comprenant une paroi cylindrique intérieure (15i) d'axe (A15), recevant le deuxième excentrique (14), monté mobile en rotation par rapport au corps de référence (15),
- un premier moyen d'entraînement (130) configuré pour entraîner en rotation le premier excentrique (13) par rapport au bâti (10), à une vitesse de rotation ω13,
- un deuxième moyen d'entraînement (140) configuré pour entraîner en rotation le deuxième excentrique (14) par rapport au bâti (10) à une vitesse de rotation ω14, simultanément à la rotation du premier excentrique (13) par rapport au bâti (10),
- des moyens de pilotage configurés pour la réalisation d'un perçage à la forme et aux dimensions souhaitées par le parcours par l'outil de coupe (12) d'une trajectoire (T) déterminée, par la mise en oeuvre des étapes suivantes :
- mise en rotation de l'outil de coupe (12) sur lui-même autour de son axe de rotation (A12),
- mises en rotations continues et simultanées du premier excentrique (13) par rapport au bâti (10) à une vitesse de rotation ω13, et du deuxième excentrique (14) par rapport au bâti (10) à une vitesse de rotation ω14, de sorte que l'outil de coupe (12) effectue également une rotation (R12) autour de l'axe (A15) du corps de référence (15) de rayon (D12), correspondant à la distance séparant l'axe (A15) du corps de référence (15) de l'axe de rotation (A12) de l'outil de coupe (12) sur lui-même,
et
- pilotage en continu et simultanément de la position angulaire Θ13 et de la vitesse de rotation ω13 par rapport au bâti (10) du premier excentrique (13), et de la position angulaire Θ14 et de la vitesse de rotation ω14 par rapport au bâti (10) du deuxième excentrique (14), de telle sorte que l'outil de coupe (12) suive ladite trajectoire (T) déterminée, située dans une zone (Z12) définie entre le cercle (C), centré sur l'axe (A15) et de rayon |E13-E14|, et le cercle (C'), centré sur l'axe (A15) et de rayon (E13+E14),
et dans lequel lesdits moyens de pilotage conviennent pour reproduire n'importe quelle trajectoire (T) de l'outil de coupe (12) dans ladite zone (Z12) par contrôle en continu au cours du perçage du décalage angulaire (Θ14-Θ13) entre la position angulaire Θ13 par rapport au bâti (10) du premier excentrique (13) et la position angulaire Θ14 par rapport au bâti (10) du deuxième excentrique (14),
et dans lequel le premier moyen d'entraînement (130) comprend une première couronne dentée (131) périphérique, montée rotative autour de l'axe (A15) du corps de référence, (15) solidaire en rotation du premier excentrique (13), et un moteur (132), solidaire du bâti (10), avec un pignon denté (133) monté sur l'arbre d'entraînement du moteur (132) venant engrener avec ladite première couronne dentée (131), la première couronne dentée (131) et le premier excentrique (131) étant solidaires par l'intermédiaire d'un joint d'Oldham (134) afin de compenser le désaxement entre la première couronne dentée (131) et le premier excentrique (13),
et dans lequel le deuxième moyen d'entraînement (140) comprend une deuxième couronne dentée (141) périphérique, solidaire et coaxiale à la paroi cylindrique extérieure (14e) du deuxième excentrique (14) et un moteur (142) avec un pignon denté (143) monté sur l'arbre d'entraînement du moteur (142) et venant engrener avec ladite couronne dentée (141),
et dans lequel le moteur (132) du premier moyen d'entraînement (130) et le moteur (142) du deuxième moyen d'entraînement (140) sont fixés sur une même paroi de fixation (F10), solidaire du bâti (10),
dans lequel le moteur (132) du premier moyen d'entraînement (130) et le moteur (142) du deuxième moyen d'entraînement (140) sont disposés décalés longitudinalement, selon l'axe (A15) du corps de référence (15), par rapport au moteur (11) entraînant l'outil de coupe (12) en rotation, le moteur (11) entraînant l'outil de coupe (12), reçu dans le premier excentrique (13), étant positionné en position longitudinale intermédiaire entre l'outil de coupe (12) et les moteurs (132, 142) du premier moyen d'entraînement (130) et du deuxième moyen d'entraînement (140), et dans lequel le moteur (132) du premier moyen d'entraînement (130) et le moteur (142) du deuxième moyen d'entraînement (140) sont chacun, au moins partiellement, en recouvrement radial par rapport au rayon (R14e) de la paroi cylindrique extérieure (14e) du deuxième excentrique (14).

2. Dispositif selon la revendication 1 dans lequel le moteur (132) du premier moyen d'entraînement (130) et/ou le moteur (142) du deuxième moyen d'entraînement (140), présente une ou plusieurs des caractéristiques suivantes :
--moteur basse tension, notamment inférieure à 48 volts,
-- moteur électrique brushless,
-- moteur à rotor externe,
-- rapport poids puissance supérieur à 5W/g,
-- employant une technologie d'aimants à haut point de Curie, notamment sensiblement égal à 200° environs,
-- présentant des fils de bobinage dont les isolants peuvent supporter des températures de 180°C.

3. Dispositif selon la revendication 1, dans lequel le moteur (132) du premier moyen d'entraînement (130) et/ou le moteur (142) du deuxième moyen d'entraînement (140), présente toutes les caractéristiques suivantes :
--moteur basse tension, notamment inférieure à 48 volts,
-- moteur électrique brushless,
-- moteur à rotor externe,
-- rapport poids puissance supérieur à 5W/g,
-- employant une technologie d'aimants à haut point de Curie, notamment sensiblement égal à 200° environs,
-- présentant des fils de bobinage dont les isolants peuvent supporter des températures de 180°C.

4. Dispositif (1) selon l'une des revendications 1 à 3, dans lequel la première couronne dentée (131) du premier moyen d'entraînement (130) et la deuxième couronne dentée (141) du deuxième moyen d'entraînement (140) sont identiques, présentant un même diamètre, un même nombre de dents, et un même pas et profil de denture.

5. Dispositif (1) selon l'une des revendications 1 à 4, comprenant en outre des moyens (16) d'entraînement en translation de l'outil de coupe (12), selon une direction parallèle à l'axe de rotation (A12) de l'outil de coupe (12) sur lui-même, afin de permettre le déplacement en translation de l'outil de coupe (12).

6. Dispositif (1) selon la revendication 5, dans lequel les moyens (16) d'entraînement en translation comprennent un système vis/écrou, comprenant une tige filetée (161) entraînée en rotation par l'intermédiaire d'un moteur (162) et un écrou monté mobile en translation par rapport au bâti (10), ladite tige filetée (161) étant reçue dans ledit écrou.

7. Dispositif (1) selon la revendication 6, dans lequel le moteur (162) des moyens (16) d'entraînement en translation est fixé sur ladite paroi de fixation (F10) du bâti (10).

8. Dispositif (1) selon la revendication7, dans lequel le moteur (162) des moyens (16) d'entraînement en translation est disposé décalé longitudinalement, selon l'axe (A15) du corps de référence (15), par rapport au moteur (11) entraînant l'outil de coupe (12) en rotation, le moteur (11) entraînant l'outil de coupe (12), reçu dans le premier excentrique (13), étant positionné en position intermédiaire entre l'outil de coupe (12) et les moteurs (132, 142, 162) du premier moyen d'entraînement (130), du deuxième moyen d'entraînement (140) et des moyens d'entraînement (160) en translation, et dans lequel le moteur (162) des moyens (16) d'entraînement en translation est également, au moins partiellement, en recouvrement radial par rapport au rayon (R14e) de la paroi cylindrique extérieure (14e) du deuxième excentrique (14).

9. Dispositif selon l'une des revendications 6 à 8, dans lequel le moteur (162) des moyens (16) d'entraînement en translation présente une ou plusieurs des caractéristiques suivantes :
--moteur basse tension, notamment inférieure à 48 volts,
-- moteur électrique brushless,
-- moteur à rotor externe,
-- rapport poids puissance supérieur à 5W/g,
-- employant une technologie d'aimants à haut point de Curie, notamment sensiblement égal à 200° environs,
-- présentant des fils de bobinage dont les isolants peuvent supporter des températures de 180°C.

10. Dispositif (1) selon l'une des revendications 6 à 9, dans lequel la tige filetée (161) du système vis/écrou est monté en entraînement direct sur le rotor du moteur (16), rigidement solidaire du rotor.

11. Dispositif (1) selon l'une des revendications 1 à 10, dans lequel le moteur (11) entraînant l'outil de coupe (12) en rotation sur lui-même comprend des moyens de branchement (17), prévus pour être branchés à une source d'énergie, afin d'alimenter ledit moteur (11) en énergie, lesdits moyens de branchement (17) étant disposés au niveau d'une extrémité longitudinale arrière (E11) du moteur (11), à l'opposé de l'outil de coupe (12),
et dans lequel un doigt de branchement (18) est prévu, configuré pour recevoir en branchement lesdits moyens de branchement (17) du moteur (11), afin d'assurer la liaison de ladite source d'énergie audit moteur (11),
ledit doigt de branchement (18) étant relié au bâti (10) par l'intermédiaire de moyens de guidage (G18, O10), configurés de sorte à autoriser une rotation du doigt de branchement (18) par rapport au bâti (10) autour d'un axe de rotation (A18), avec un débattement angulaire limité, combinée à une translation dudit axe de rotation (A18) selon une direction (D18), sensiblement perpendiculaire à l'axe de rotation (A18), sur une distance limitée, de sorte à sensiblement immobiliser le moteur (11) en rotation autour de l'axe de rotation (A12) de l'outil de coupe (12) sur lui-même, avec un débattement angulaire limité, par l'intermédiaire des moyens de branchement (17).

12. Procédé de perçage orbital pour la réalisation d'un perçage dans une pièce, comprenant les étapes :
(a) fournitures d'un dispositif de perçage orbital (1) selon l'une des revendications 1 à 11
(b) réalisation d'un perçage à la forme et aux dimensions souhaitées par le parcours par l'outil de coupe (12) d'une trajectoire (T) déterminée, avec :
- mise en rotation de l'outil de coupe (12) autour de son axe (A12) par l'action du moteur (11),
- mises en rotations continues et simultanées du premier excentrique (13) par rapport au bâti (10) par le premier moyen d'entraînement (130) à une vitesse de rotation (ω13), et du deuxième excentrique (14) par rapport au bâti à une vitesse de rotation (ω14) par le deuxième moyen d'entraînement (140), de sorte que l'outil de coupe (12) effectue également une rotation (R12) autour de l'axe (A15) du corps de référence (15) de rayon (D12), correspondant à la distance séparant l'axe (A15) du corps de référence (15) de l'axe de rotation (A12) de l'outil de coupe (12) sur lui-même,
et
- pilotage en continu et simultanément de la position angulaire (Θ13) et de la vitesse de rotation (ω13) par rapport au bâti (10) du premier excentrique (13), et de la position angulaire (Θ14) et de la vitesse de rotation (ω14) par rapport au bâti (10) du deuxième excentrique (14), de telle sorte que l'outil de coupe (12) suive ladite trajectoire (T) déterminée, située dans une zone (Z12) définie entre le cercle C, centré sur l'axe (A15) et de rayon (|E13-E14|), et le cercle C', centré sur l'axe (A15) et de rayon (E13+E14),
et lequel le procédé convient pour reproduire n'importe quelle trajectoire (T) de l'outil de coupe (12) dans ladite zone (Z12) par contrôle en continu du décalage angulaire (Θ14-Θ13) entre la position angulaire (Θ13) par rapport au bâti (10) du premier excentrique (13 )et la position angulaire (Θ14 )par rapport au bâti 10 du deuxième excentrique (14).

## Patentansprüche

1. Orbitale Bohrvorrichtung (1), umfassend, auf demselben Rahmen (10):
- einen Elektromotor (11), umfassend einen Rotor und einen Stator,
- ein Schneidwerkzeug (12), das von dem genannten Motor (11) in Drehung um sich selbst, um seine Drehachse (A12), angetrieben wird, wobei das Schneidwerkzeug (12) direkt angetrieben an dem genannten Rotor des genannten Motors (11), starr fest verbunden mit dem Rotor, montiert ist,
- einen ersten inneren Exzenter (13), umfassend einen Hohlzylinderkörper, der integral den genannten Motor (11) aufnimmt, wobei der genannte erste Exzenter (13) dafür ausgelegt ist, um beweglich in Drehung in Bezug auf den Motor (11) montiert zu werden, wobei der genannte Motor (11) dafür ausgelegt ist, um im Wesentlichen unbeweglich in Drehung in Bezug auf den Rahmen (10) um die Drehachse (A12) des Schneidwerkzeugs (12) um sich selbst montiert zu werden, wobei der erste Exzenter (13) eine innere zylindrische Wand (13i) mit einer Achse (A13i) und eine äußere zylindrische Wand (13e) mit einer Achse (A13e) umfasst, wobei die Achse (A13i) der inneren zylindrischen Wand (13i) um eine Distanz (E13) in Bezug auf die Achse (A13e) der äußeren zylindrischen Wand (13e) versetzt ist,
- einen zweiten äußeren Exzenter (14), umfassend einen Hohlzylinderkörper, der den ersten Exzenter (13) aufnimmt, welcher beweglich in Drehung in Bezug auf den zweiten Exzenter (14) montiert ist, wobei der zweite Exzenter (14) eine innere zylindrische Wand (14i) mit einer Achse (A14i) und eine äußere zylindrische Wand (14e) mit einer Achse (A14e) umfasst, wobei die Achse (A14i) der inneren zylindrischen Wand (14i) in Bezug auf die Achse (A14e) der äußeren zylindrischen Wand (14e) versetzt ist,
- einen Referenzkörper (15), der mit dem Rahmen (10) fest verbunden ist, umfassend eine innere zylindrische Wand (15i) mit einer Achse (A15), die den zweiten Exzenter (14) aufnimmt, der beweglich in Drehung in Bezug auf den Referenzkörper (15) montiert ist,
- ein erstes Antriebsmittel (130), das dafür ausgelegt ist, um den ersten Exzenter (13) in Bezug auf den Rahmen (10) mit einer Drehgeschwindigkeit ω13 in Drehung anzutreiben,
- ein zweites Antriebsmittel (140), das dafür ausgelegt ist, um den zweiten Exzenter (14) in Bezug auf den Rahmen (10) mit einer Drehgeschwindigkeit ω14 in Drehung anzutreiben, gleichzeitig mit der Drehung des ersten Exzenters (13) in Bezug auf den Rahmen (10),
- Steuermittel, die dafür ausgelegt sind, um ein Bohren in der Form und in den Abmessungen durchzuführen, die von dem Durchlaufen einer bestimmten Bahn (T) durch das Schneidwerkzeug (12) vorgegeben werden, indem die folgenden Schritte vorgenommen werden:
- Versetzen des Schneidwerkzeugs (12) in Drehung um sich selbst um seine Drehachse (A12),
- Versetzen des ersten Exzenters (13) in kontinuierliche und gleichzeitige Drehungen in Bezug auf den Rahmen (10) mit einer Drehgeschwindigkeit ω13 und des zweiten Exzenters (14) in Bezug auf den Rahmen (10) mit einer Drehgeschwindigkeit ω14, derart, dass das Schneidwerkezug (12) auch eine Drehung (R12) um die Achse (A15) des Referenzkörpers (15) mit einem Radius (D12) ausführt, welcher der Distanz entspricht, welche die Achse (A15) des Referenzkörpers (15) von der Drehachse (A12) des Schneidwerkzeugs (12) um sich selbst trennt,
und
- kontinuierliches und gleichzeitiges Steuern der Winkelposition θ13 und der Drehgeschwindigkeit ω13 in Bezug auf den Rahmen (10) des ersten Exzenters (13) und der Winkelposition θ14 und der Drehgeschwindigkeit ω14 in Bezug auf den Rahmen (10) des zweiten Exzenters (14), derart, dass das Schneidwerkzeug (12) der genannten bestimmten Bahn (T) folgt, die in einer Zone (Z12) angeordnet ist, welche zwischen dem Kreis (C), zentriert auf die Achse (A15) und mit dem Radius |E13-E14|, und dem Kreis (C'), zentriert auf die Achse (A15) und mit dem Radius (E13+E14), definiert ist,
und wobei die genannten Steuermittel dazu geeignet sind, um jede Bahn (T) des Schneidwerkzeugs (12) in der genannten Zone (Z12) durch die kontinuierliche Steuerung der Winkelversetzung (θ14-θ13) während des Bohrens zwischen der Winkelposition θ13 in Bezug auf den Rahmen (10) des ersten Exzenters (13) und der Winkelposition θ14 in Bezug auf den Rahmen (10) des zweiten Exzenters (14) zu reproduzieren,
und wobei das erste Antriebsmittel (130) umfasst: einen ersten peripheren Zahnkranz (131), der drehbar um die Achse (A15) des Referenzkörpers (15), fest verbunden in Drehung mit dem ersten Exzenter (13), montiert ist, und einen Motor (132), fest verbunden mit dem Rahmen (10), mit einem Ritzel (133), das auf der Antriebswelle des Motors (132) montiert ist und mit dem genannten ersten Zahnkranz (131) in Eingriff gelangt, wobei der erste Zahnkranz (131) und der erste Exzenter (131) mit Hilfe einer Oldham-Kupplung (134) fest verbunden sind, um die Achsenverschiebung zwischen dem ersten Zahnkranz (131) und dem ersten Exzenter (13) zu kompensieren,
und wobei das zweite Antriebsmittel (140) umfasst: eine zweite periphere Zahnkrone (141), fest verbunden und koaxial mit der äußeren zylindrischen Wand (14e) des zweiten Exzenters (14), und einen Motor (142) mit einem Ritzel (143), das auf der Antriebswelle des Motors (142) montiert ist und mit dem genannten zweiten Zahnkranz (141) in Eingriff gelangt,
und wobei der Motor (132) des ersten Antriebsmittels (130) und der Motor (142) des zweiten Antriebsmittels (140) an derselben Befestigungswand (F10), fest verbunden mit dem Gehäuse (10), befestigt sind,
wobei der Motor (132) des ersten Antriebsmittels (130) und der Motor (142) des zweiten Antriebsmittels (140) in Längsrichtung versetzt, in der Achse (A15) des Referenzkörpers (15), in Bezug auf den Motor (11) angeordnet sind, der das Schneidwerkzeug (12) in Drehung antreibt, wobei der Motor (11), der das Schneidwerkzeug (12) antreibt, das in dem ersten Exzenter (13) aufgenommen ist, in einer Zwischenposition in Längsrichtung zwischen dem Schneidwerkzeug (12) und den Motoren (132, 142) des ersten Antriebsmittels (130) und des zweiten Antriebsmittels (140) positioniert ist, und wobei der Motor (132) des ersten Antriebsmittels (130) und der Motor (142) des zweiten Antriebsmittels (140) jeweils, mindestens teilweise, einander radial in Bezug auf den Radius (R14e) der äußeren zylindrischen Wand (14e) des zweiten Exzenters (14) überlappen.

2. Vorrichtung nach Anspruch 1, wobei der Motor (132) des ersten Antriebsmittels (130) und/oder der Motor (142) des zweiten Antriebsmittels (140) eines oder mehrere der folgenden Merkmale aufweist/aufweisen:
-- Motor mit niedriger Spannung, insbesondere weniger als 48 Volt,
-- bürstenloser Elektromotor,
-- Motor mit externem Rotor,
-- Verhältnis Gewicht/Leistung von mehr als 5 W/g,
-- Verwendung einer Technologie mit Magneten mit hohem Curie-Punkt, insbesondere im Wesentlichen ungefähr gleich 200°,
-- mit Wickeldrähten, deren Isolatoren Temperaturen von 180 °C standhalten können.

3. Vorrichtung nach Anspruch 1, wobei der Motor (132) des ersten Antriebsmittels (130) und/oder der Motor (142) des zweiten Antriebsmittels (140) alle der folgenden Merkmale aufweist/aufweisen:
-- Motor mit niedriger Spannung, insbesondere weniger als 48 Volt,
-- bürstenloser Elektromotor,
-- Motor mit externem Rotor,
-- Verhältnis Gewicht/Leistung von mehr als 5 W/g,
-- Verwendung einer Technologie mit Magneten mit hohem Curie-Punkt, insbesondere im Wesentlichen ungefähr gleich 200°,
-- mit Wickeldrähten, deren Isolatoren Temperaturen von 180 °C standhalten können.

4. Vorrichtung (1) nach einem der Ansprüche 1 bis 3, wobei der ersten Zahnkranz (131) des ersten Antriebsmittels (130) und der zweite Zahnkranz (141) des zweiten Antriebsmittels (140) identisch sind und denselben Durchmesser, dieselbe Anzahl von Zähnen und denselben Abstand und dasselbe Profil der Zahnung aufweisen.

5. Vorrichtung (1) nach einem der Ansprüche 1 bis 4, ferner umfassend translatorische Antriebsmittel (16) des Schneidwerkzeugs (12) in einer Richtung parallel zur Drehachse (A12) des Schneidwerkzeugs (12) um sich selbst, um die translatorische Verschiebung des Schneidwerkzeugs (12) zu gestatten.

6. Vorrichtung (1) nach Anspruch 5, wobei die translatorischen Antriebsmittel (16) ein System Schraube/Mutter umfassen, umfassend einen Gewindeschaft (161), der in Drehung mit Hilfe eines Motors (162) angetrieben wird, und eine Mutter, die translatorisch beweglich in Bezug auf den Rahmen (10) montiert ist, wobei der genannte Gewindeschaft (161) in der genannten Mutter aufgenommen ist.

7. Vorrichtung (1) nach Anspruch 6, wobei der Motor (162) der translatorischen Antriebsmittel (16) an der genannten Befestigungswand (F10) des Rahmens (10) befestigt ist.

8. Vorrichtung (1) nach Anspruch 7, wobei der Motor (162) der translatorischen Antriebsmittel (16) in Längsrichtung versetzt, in der Achse (A15) des Referenzkörpers (15), in Bezug auf den Motor (11) angeordnet ist, der das Schneidwerkzeug (12) in Drehung antreibt, wobei der Motor (11), der das Schneidwerkzeug (12) antreibt, das in dem ersten Exzenter (13) aufgenommen ist, in einer Zwischenposition zwischen dem Schneidwerkzeug (12) und den Motoren (132, 142, 162) des ersten Antriebsmittels (130), des zweiten Antriebsmittels (140) und der translatorischen Antriebsmittel (160) positioniert ist, und wobei auch der Motor (162) der translatorischen Antriebsmittel (16), mindestens teilweise, radial in Bezug auf den Radius (R14e) der äußeren zylindrischen Wand (14e) des zweiten Exzenters (14) überlappt.

9. Vorrichtung nach einem der Ansprüche 6 bis 8, wobei der Motor (162) der translatorischen Antriebsmittel (16) eines oder mehrere der folgenden Merkmale aufweist:
-- Motor mit niedriger Spannung, insbesondere weniger als 48 Volt,
-- bürstenloser Elektromotor,
-- Motor mit externem Rotor,
-- Verhältnis Gewicht/Leistung von mehr als 5 W/g,
-- Verwendung einer Technologie mit Magneten mit hohem Curie-Punkt, insbesondere im Wesentlichen ungefähr gleich 200°,
-- mit Wickeldrähten, deren Isolatoren Temperaturen von 180 °C standhalten können.

10. Vorrichtung (1) nach einem der Ansprüche 6 bis 9, wobei der Gewindeschaft (161) des Systems Schraube/Mutter direkt angetrieben an dem Rotor des Motors (16), starr fest verbunden mit dem Rotor, montiert ist.

11. Vorrichtung (1) nach einem der Ansprüche 1 bis 10, wobei der Motor (11), der das Schneidwerkzeug (12) in Drehung um sich selbst antreibt, Anschlussmittel (17) umfasst, die bereitgestellt sind, um an eine Energiequelle angeschlossen zu werden, um den genannten Motor (11) mit Energie zu versorgen, wobei die genannten Anschlussmittel (17) auf der Höhe eines hinteren Längsendes (E11) des Motors (11) gegenüber dem Schneidwerkzeug (12) angeordnet sind,
und wobei ein Anschlussfinger (18) bereitgestellt ist, der dafür ausgelegt ist, um angeschlossen die genannten Anschlussmittel (17) des Motors (11) aufzunehmen, um die Verbindung der genannten Energiequelle mit dem genannten Motor (11) sicherzustellen,
wobei der Anschlussfinger (18) mit dem Rahmen (10) mit Hilfe von Führungsmitteln (G18, O10) verbunden ist, die derart ausgelegt sind, dass sie eine Drehung des Anschlussfingers (18) in Bezug auf den Rahmen (10) um eine Drehachse (A18) zulassen, mit einer begrenzten Winkelablenkung, kombiniert mit einer Translation der genannten Drehachse (A18) in einer Richtung (D18), im Wesentlichen rechtwinklig zur Drehachse (A18), über eine begrenzte Distanz, um den Motor (11) in Drehung um die Drehachse (A12) des Schneidwerkzeugs (12) um sich selbst im Wesentlichen zu immobilisieren, mit einer begrenzten Winkelablenkung, mit Hilfe der Anschlussmittel (17).

12. Verfahren zum orbitalen Bohren zur Durchführung eines Bohrens in einem Stück, umfassend die Schritte:
(a) Bereitstellen einer orbitalen Bohrvorrichtung (1) nach einem der Ansprüche 1 bis 11,
(b) Durchführen eines Bohrens in der Form und in den Abmessungen, die von dem Durchlaufen einer bestimmten Bahn (T) durch das Schneidwerkzeug (12) vorgegeben werden, mit:
- Versetzen des Schneidwerkzeugs (12) in Drehung um seine Achse (A12) durch die Wirkung des Motors (11),
- Versetzen des ersten Exzenters (13) in kontinuierliche und gleichzeitige Drehungen in Bezug auf den Rahmen (10) durch das erste Antriebsmittel (130) mit einer Drehgeschwindigkeit (ω13) und des zweiten Exzenters (14) in Bezug auf den Rahmen mit einer Drehgeschwindigkeit (ω14) durch das zweite Antriebsmittel (140), derart, dass das Schneidwerkezug (12) auch eine Drehung (R12) um die Achse (A15) des Referenzkörpers (15) mit einem Radius (D12) ausführt, welcher der Distanz entspricht, welche die Achse (A15) des Referenzkörpers (15) von der Drehachse (A12) des Schneidwerkzeugs (12) um sich selbst trennt,
und
- kontinuierlichem und gleichzeitigem Steuern der Winkelposition (θ13) und der Drehgeschwindigkeit (ω13) in Bezug auf den Rahmen (10) des ersten Exzenters (13) und der Winkelposition (θ14) und der Drehgeschwindigkeit (ω14) in Bezug auf den Rahmen (10) des zweiten Exzenters (14), derart, dass das Schneidwerkzeug (12) der genannten bestimmten Bahn (T) folgt, die in einer Zone (Z12) angeordnet ist, welche zwischen dem Kreis C, zentriert auf die Achse (A15) und mit dem Radius (|E13-E14|), und dem Kreis C', zentriert auf die Achse (A15) und mit dem Radius (E13+E14), definiert ist,
und wobei das Verfahren dazu geeignet ist, um jede Bahn (T) des Schneidwerkzeugs (12) in der genannten Zone (Z12) durch die kontinuierliche Steuerung der Winkelversetzung (θ14-θ13) zwischen der Winkelposition (θ13) in Bezug auf den Rahmen (10) des ersten Exzenters (13) und der Winkelposition (θ14) in Bezug auf den Rahmen 10 des zweiten Exzenters (14) zu reproduzieren.

## Claims

1. Orbital drilling device (1) comprising, on the same frame (10):
- a motor (11), electric, comprising a rotor and a stator
- a cutting tool (12) rotated on itself by said motor (11), about its rotation axis (A12), the cutting tool (12) being mounted in direct drive on said rotor of said motor (11), rigidly secured to the rotor,
- a first, inner, eccentric (13), comprising a hollow cylindrical body receiving said motor (11), integrally said first eccentric (13) being configured to be mounted so as to be able to rotate with respect to the motor (11), said motor (11) being configured to be mounted substantially rotationally immobile with respect to the frame (10) about the axis (A12) of rotation of the cutting tool (12) on itself, the first eccentric (13) comprising an internal cylindrical wall (13i) of axis (A13i) and an external cylindrical wall (13e) of axis (A13e), the axis (A13i) of the internal cylindrical wall (13i) being offset by a distance (E13) with respect to the axis (A13e) of the external cylindrical wall (13e),
- a second, outer, eccentric (14), comprising a hollow cylindrical body receiving the first eccentric (13), mounted so as to be able to rotate with respect to the second eccentric (14), the second eccentric (14) comprising an internal cylindrical wall (14i) of axis (A14i) and an external cylindrical wall (14e) of axis (A14e), the axis (A14i) of the internal cylindrical wall (14i) being offset with respect to the axis (A14e) of the external cylindrical wall,
- a reference body (15), secured to the frame (10), comprising an internal cylindrical wall (15i) of axis (A15), receiving the second eccentric (14), mounted so as to be able to rotate with respect to the reference body (15),
- a first drive means (130) configured to rotate the first eccentric (13) with respect to the frame (10), at a rotation speed ω13,
- a second drive means (140) configured to rotate the second eccentric (14) with respect to the frame (10), at a rotation speed ω14, simultaneously with the rotation of the first eccentric (13) with respect to the frame (10),
- control means configured for producing a drilling to the required shape and dimensions through the following of a given path (T) by the cutting tool (12), by implementing the following steps:
- rotation of the cutting tool (12) on itself about the rotation axis (A12) thereof,
- continuous and simultaneous rotations of the first eccentric (13) with respect to the frame (10) at a rotation speed ω13, and of the second eccentric (14) with respect to the frame (10) at a rotation speed ω14 so that the cutting tool (12) also performs a rotation (R12) about the axis (A15) of the reference body (15) with a radius (D12) corresponding to the distance separating the axis (A15) of the reference body (15) from the axis (A12) of rotation of the cutting tool (12) on itself,
and
- continuous and simultaneous control of the angular position ⊖13 and of the rotation speed ω13 with respect to the frame (10) of the first eccentric (13), and of the angular position ⊖14 and of the rotation speed ω14 with respect to the frame (10) of the second eccentric (14), so that the cutting tool (12) follows said given path (T), situated in a zone (Z12) defined between the circle (C) centered on the axis (A15) and of radius |E13-E14|, and the circle (C') centered on the axis (A15) and of radius E13+E14,
and wherein said control means are suitable for reproducing any path (T) of the cutting tool (12) in said zone (Z12) by continuous control during the drilling of the angular offset (⊖14-⊖13) between the angular position ⊖13 with respect to the frame (10) of the first eccentric (13) and the angular position ⊖14 with respect to the frame (10) of the second eccentric (14),
and wherein the first drive means (130) comprises a first peripheral toothed ring (131), mounted so as to rotate about the axis (A15) of the reference body (15), constrained to rotate with the first eccentric (13), and a motor (132), secured to the frame (10), with a toothed pinon (133) mounted on the drive shaft of the motor (132) meshing with said first toothed ring (131), the first toothed ring (131) and the first eccentric (131) being secured together by means of an Oldham coupling (134) in order to compensate for any offset between the first toothed ring (131) and the first eccentric (13),
and wherein the second drive means (140) comprises a second peripheral toothed ring (141), secured to and coaxial with the external cylindrical wall (14e) of the second eccentric (14) and
a motor (142) with a toothed pinon (143) mounted on the drive shaft of the motor (142) and meshing with said toothed ring (141),
and wherein the motor (132) of the first drive means (130) and the motor (142) of the second drive means (140) are fixed to the same fixing wall (F10), secured to the frame (10),
and wherein the motor (132) of the first drive means (130) and the motor (142) of the second drive means (140) are disposed so as to be offset longitudinally, along the axis (A15) of the reference body (15), with respect to the motor (11) rotating the cutting tool (12), the motor (11) driving the cutting tool (12), received in the first eccentric (13), being positioned in an intermediate longitudinal position between the cutting tool (12) and the motors (132, 142) of the first drive means (130) and of the second drive means (140), and wherein the motor (132) of the first drive means (130) and the motor (142) of the second drive means (140) are each, at least partially, overlapping radially with respect to the radius (R14e) of the external cylindrical wall (14e) of the second eccentric (14).

2. Device according to claim 1, wherein the motor (132) of the first drive means (130) and/or the motor (142) of the second drive means (140) has one or more of the following characteristics:
-- low-voltage motor, in particular below 48 volts,
-- brushless electric motor,
-- external-rotor motor,
-- weight-to-power ratio greater than 5W/g,
-- using a magnet technology with a high Curie point, in particular substantially equal to approximately 200°,
-- having winding wires the insulators of which can withstand temperatures of 180°C.

3. Device according to claim 1, wherein the motor (132) of the first drive means (130) and/or the motor (142) of the second drive means (140), has all of the following characteristics:
-- low-voltage motor, in particular below 48 volts,
-- brushless electric motor,
-- external-rotor motor,
-- weight-to-power ratio greater than 5W/g,
-- using a magnet technology with a high Curie point, in particular substantially equal to approximately 200°,
-- having winding wires the insulators of which can withstand temperatures of 180°C.

4. Device (1) according to one of claims 1 to 3, wherein the first toothed ring (131) of the first drive means (130) and the second toothed ring (141) of the second drive means (140) are identical, having the same diameter, the same number of teeth, and the same tooth pitch and profile.

5. Device (1) according to one of claims 1 to 4, further comprising means (16) for driving the cutting tool (12) in translation, in a direction parallel to the axis (A12) of rotation of the cutting tool (12) on itself, in order to allow the translational movement of the cutting tool (12).

6. Device (1) according to claim 5, wherein the means (16) for driving in translation comprise a screw/nut system, comprising a threaded rod (161) rotated by means of a motor (162) and a nut mounted so as to be able to move in translation with respect to the frame (10), said threaded rod (161) being received in said nut.

7. Device (1) according to claim 6, wherein the motor (162) of the means (16) for driving in translation is fixed to said fixing wall (F10) of the frame (10).

8. Device (1) according to claim 7, wherein the motor (162) of the means (16) for driving in translation is disposed so as to be offset longitudinally along the axis (A15) of the reference body (15) with respect to the motor (11) rotating the cutting tool (12), the motor (11) driving the cutting tool (12), received in the first eccentric (13), being positioned in an intermediate position between the cutting tool (12) and the motors (132, 142, 162) of the first drive means (130), of the second drive means (140) and of the means (160) for driving in translation, and wherein the motor (162) of the means (16) for driving in translation is also, at least partially, overlapping radially with respect to the radius (R14e) of the external cylindrical wall (14e) of the second eccentric (14).

9. Device according to one of claims 6 to 8, wherein the motor (162) of the means (16) for driving in translation has one or more of the following characteristics:
-- low-voltage motor, in particular below 48 volts,
-- brushless electric motor,
-- external-rotor motor,
-- weight-to-power ratio greater than 5W/g,
-- using a magnet technology with a high Curie point, in particular substantially equal to approximately 200°,
-- having winding wires the insulators of which can withstand temperatures of 180°C.

10. Device (1) according to one of claims 6 to 9, wherein the threaded rod (161) of the screw/nut system is mounted in direct drive on the rotor of the motor (16), rigidly secured to the rotor.

11. Device (1) according to one of claims 1 to 10, wherein the motor (11) rotating the cutting tool (12) on itself comprises connection means (17) provided for being connected to an energy source in order to supply said motor (11) with energy, said connection means (17) being disposed at a rear longitudinal end (E11) of the motor (11), opposite to the cutting tool (12),
and wherein a connection finger (18) is provided, configured to receive in connection said connection means (17) of the motor (11), in order to provide the connection of said energy source to said motor (11),
said connection finger (18) being connected to the frame (10) by means of guide means (G18, O10), configured so as to allow a rotation of the connection finger (18) with respect to the frame (10) about a rotation axis (A18), with a limited angular movement, combined with a translation of said rotation axis (A18) in a direction (D18) substantially perpendicular to the rotation axis (A18), over a limited distance, so as to substantially immobilize the motor (11) with respect to rotation about the axis (A12) of rotation of the cutting tool (12) on itself, with a limited angular movement, by means of the connection means (17).

12. An orbital drilling method for producing a drilling in a part, comprising the steps:
(a) provision of an orbital drilling device (1) according to one of the claims 1 to 11
(b) production of a drilling to the required shape and dimensions through the travel by the cutting tool (12) of a given path (T) with:
- rotation of the cutting tool (12) about the axis (A12) thereof by the action of the motor (11),
- continuous and simultaneous rotations of the first eccentric (13) with respect to the frame (10) by the first drive means (130) at a rotation speed (ω13), and of the second eccentric (14) with respect to the frame at a rotation speed (ω14) by the second drive means (140), so that the cutting tool (12) also makes a rotation (R12) about the axis (A15) of the reference body (15) of radius (D12), corresponding to the distance separating the axis (A15) of the reference body (15) from the axis (A12) of rotation of the cutting tool (12) on itself,
and
- continuous and simultaneous control of the angular position (⊖13) and of the rotation speed (ω13) with respect to the frame (10) of the first eccentric (13), and of the angular position (⊖14) and of the rotation speed (ω14) with respect to the frame (10) of the second eccentric (14), so that the cutting tool (12) follows said given path (T), situated in a zone (Z 12) defined between the circle (C), centered on the axis (A15) and of radius (|E13-E14|), and the circle (C'), centered on the axis (A15) and of radius (E13+E14),
and wherein the method is suitable for reproducing any path (T) of the cutting tool (12) in said zone (Z 12) by continuous control of the angular offset (⊖14-⊖13) between the angular position (⊖13) with respect to the frame (10) of the first eccentric (13) and the angular position (⊖14) with respect to the frame (10) of the second eccentric (14).
